# EUROPÄISCHE PATENTANMELDUNG

(11) **EP 4 700 259 A1**
(43) Veröffentlichungstag der Anmeldung: **25.02.2026**
(21) Anmeldenummer: 25000069.2
(22) Anmeldetag: 05.06.2025
(51) Int. Cl.: F16K 11/12, F16K 11/16

(54) **SCHNELL UND/ODER LEICHT VERSTELLBARES DREI- ODER MEHRWEGEVENTIL**

(30) Priorität: 05.06.2024 DE 102024001833; 05.06.2024 DE 102024001832
(71) Anmelder: Keitsch, Markus, 56759 Kaisersesch (DE)
(72) Erfinder: Keitsch, Markus, 56759 Kaisersesch (DE)

(57) **Zusammenfassung**

Die Erfindung betrifft ein mechanisch betätigtes Drei- oder Mehrwegeventil, welches mit weniger mechanischer Arbeit verstellbar ist als herkömmliche mechanisch betätigbare Drei- oder Mehrwegeventile. Ermöglicht wird dies durch zwei hintereinander angeordnete Trennvorrichtungen (2a, 2b), wobei wenigstens eine der Trennvorrichtungen (2a, 2b) eine Vorrichtungsaussparung aufweist. In dieser Vorrichtungsaussparung ist eine Vorrichtung zum reversiblen Einwirken auf die Trennvorrichtung (2a, 2b) angeordnet. Dies kann eine Stellvorrichtung (6), eine Anpressvorrichtung (16) oder eine Kombination aus diesen beiden sein. Bei allen möglichen Ausbildungsformen an Vorrichtungen ist durch die Position der Anordnung und/oder durch die Ausbildungsform der Vorrichtung durch dessen Einwirken ein leichteres Verstellen erfindungsgemäßer Ventile gegeben, was die notwendige mechanische Arbeit zum Verstellen reduziert. Dadurch können wesentlich schwächere und somit kleiner ausgelegte Antriebe zum Betätigen der Stellvorrichtung (6) vorgesehen werden. In weiter verbesserten Ausführungen erfindungsgemäßer Ventile können durch mehr als eine Durchlassöffnung (3) für wenigstens ein, vorzugsweise mehrere oder alle Zu-/Ableitungsöffnungen (5a bis 5d) eines erfindungsgemäßen Ventils die Stellwege wesentlich verkürzt und somit die mechanische Arbeit zum Verstellen des Ventils weiter reduziert werden.

## Beschreibung

### Technisches Gebiet

Die Erfindung betrifft ein mechanisch betätigtes Ventil, welches drei oder mehr Zu-/Ableitungsöffnungen aufweist. Dabei handelt es sich im engeren Sinne nicht bei allen Ausführungen um ein Ventil, sondern um eine Armatur. Bei bevorzugten Ausführungen aber wird mithilfe einer Anpressvorrichtung zum möglichst vollständigen Abdichten ein Verschlussteil - hier "Trennvorrichtung" - minimal etwa parallel zur Strömungsrichtung des Fluids bewegt und somit mit ihrer Dichtfläche - hier "Aussparungsbrücke" - an eine passend geformte Öffnung - hier "Durchlassaussparung" - gepresst, womit diese Ausführungsformen auch im engeren Sinne als Ventil bezeichnet werden können. Zur Vereinfachung wird in dieser Patentanmeldung durchgängig der Begriff "Ventil" und dieser somit im erweiterten Sinne verwendet.

### Stand der Technik

Drei- oder Mehrwegventile gibt es bereits in zahlreichen Ausführungen und diese sind seit langem bekannt. Insbesondere Kugel-, Rohr- oder Kolbenventile kommen dabei zum Einsatz. Bei diesen ist aber immer ein relativ großer Kraftaufwand zum Verstellen notwendig und sie zeichnen sich durch relativ lange Stellwege aus. Insbesondere vielseitig arbeitende Ventile, bei denen zahlreiche Öffnungskombinationen ersteuerbar sind, müssen mit entsprechend langen Stellwegen und aufwändig ausgelegt werden.

### Darstellung der Erfindung

Es ist daher Aufgabe der Erfindung, ein Ventil mit drei oder mehr Zu-/Ableitungsöffnungen zur Verfügung zu stellen, welches sich mit geringerem Kraftaufwand und/oder mittels kürzerer Stellwege verstellen lässt, auch bei vielseitig arbeitenden Ventilen mit zahlreichen möglichen Öffnungskombinationen.

Diese Aufgabe der Erfindung wird mit den Merkmalen des unabhängigen Anspruchs gelöst. Vorteilhafte Ausgestaltungen der Erfindung finden sich in den jeweiligen abhängigen Ansprüchen.

Es wird hierbei ein Ventil zur Steuerung des Strömens eines Fluids mit einem Ventilgehäuse mit wenigstens drei Zu-/Ableitungsöffnungen, wenigstens einer Stellvorrichtung und wenigstens zwei Trennvorrichtungen, welche im Wesentlichen dichtend aneinander liegend angeordnet sind, zur Verfügung gestellt. Dabei ist wenigstens eine der Trennvorrichtungen durch die wenigstens eine Stellvorrichtung in ihrer relativen Position zu wenigstens einer weiteren Trennvorrichtung reversibel verstellbar. Die wenigstens zwei Trennvorrichtungen weisen zudem Aussparungen auf, die hier als Durchlassaussparungen bezeichnet werden; die sich zwischen den Durchlassaussparungen einer Trennvorrichtung befindenden Abschnitte der Trennvorrichtung werden hier als Aussparungsbrücken bezeichnet und definiert. Die Durchlassaussparungen sind so in den Trennvorrichtungen angeordnet und ausgebildet, dass durch sich wenigstens teilweise überlagernde - also wenigstens teilweise deckungsgleich liegende - Durchlassaussparungen der Trennvorrichtungen Öffnungen ausbildbar sind, durch welche das Fluid somit strömen kann. Diese Öffnungen werden hier als Durchlassöffnungen bezeichnet. Daraus ergibt sich, dass wenigstens zwei Trennvorrichtungen - bezogen auf die Strömungsrichtung des Fluids bei einem Zu- oder Ableiten durch Durchlassöffnungen - hintereinander angeordnet sind, bzw. sein müssen. Vorteilhaft können aber auch drei oder mehr Trennvorrichtungen hintereinander angeordnet sein. Bei einem erfindungsgemäßen Ventil sind die Trennvorrichtungen, die Durchlassaussparungen, die Aussparungsbrücken und die wenigstens eine Stellvorrichtung so angeordnet, ausgebildet und eingerichtet, dass die Trennvorrichtungen mithilfe der wenigstens einen Stellvorrichtung relativ zueinander reversibel so positionierbar sind, dass sich für wenigstens eine der Zu-/Ableitungsöffnungen, an die beispielsweise die Fluidleitungen angeschlossen sind, zeitgleich wenigstens zwei Durchlassöffnungen ausbilden können. Vorteilhaft ist, wenn sich für alle Zu-/Ableitungsöffnungen wenigstens zwei Durchlassöffnungen ausbildbar sind. Weiterhin vorteilhaft wäre, wenn mehr als zwei Durchlassöffnungen pro Zu-/Ableitungsöffnung ausbildbar sind.

Neben Ventilausführungen mit zwei hintereinander angeordneten Trennvorrichtungen sind auch Ausführungen mit drei oder mehr - bezogen auf die Strömungsrichtung des Fluids bei einem Zu- oder Ableiten durch Durchlassöffnungen - hintereinander und dichtend aneinander angeordneten Trennvorrichtungen möglich und ggf. vorteilhaft. So können bei komplexen erfindungsgemäßen Ventilen ggf. noch mehr Öffnungskombinationen ersteuert werden.

Dadurch, dass das Fluid nicht durch eine, sondern durch wenigstens zwei Durchlassöffnungen zu oder von einer Zu-/Ableitungsöffnung strömt, können die Durchlassaussparungen - aus denen sich bei Überlagerung die Durchlassöffnungen ergeben - für einen gleich großen maximal möglichen Volumenstrom kleiner ausgebildet sein. Somit verkürzt sich bei günstiger Anordnung und Ausbildung der Durchlassaussparungen der entsprechend notwendige Stellweg; bei zwei Durchlassöffnungen für eine Zu-/Ableitungsöffnung mit gleichem maximal möglichem Volumenstrom verkürzt sich der Stellweg etwa auf die Hälfte, bei drei Durchlassöffnungen auf ein Drittel, bei vier Durchlassöffnungen auf ein Viertel, usw.. Auf diese Weise können die notwendigen Stellwege zum Verstellen des Ventils wesentlich verkürzt und der Stellvorgang wesentlich beschleunigt werden, bzw. bei entsprechend auf den kürzeren Stellweg angepasster Übersetzung eines Stellantriebes, z.B. eines Elektromotors, oder eines entsprechend darauf angepassten Hebelarms mit weniger Kraft betätigt werden. Es ist somit weniger mechanische Arbeit notwendig ein erfindungsgemäßes Ventil zu betätigen/verstellen.

Zur textlichen Vereinfachung wird in dieser Patentschrift das Ersteuern von Durchlassöffnungen für eine bestimmte Zu-/Ableitungsöffnung ggf. auch als ein Öffnen dieser Zu-/Ableitungsöffnung formuliert; umgekehrt wird das Verstellen der Trennvorrichtungen relativ zueinander zum Zwecke des Schließens der Durchlassöffnungen für eine bestimmte Zu-/Ableitungsöffnung als ein Schließen dieser Zu-/Ableitungsöffnung formuliert. Oder diese Vorgänge werden als Verstellen des erfindungsgemäßen Ventils beschrieben. Der Begriff Zu-/Ableitungsöffnung soll zudem verdeutlichen, dass bei einem erfindungsgemäßen Ventil diese Öffnungen grundsätzlich sowohl zum Zuleiten als auch zum Ableiten von Fluid einsetzbar sein können.

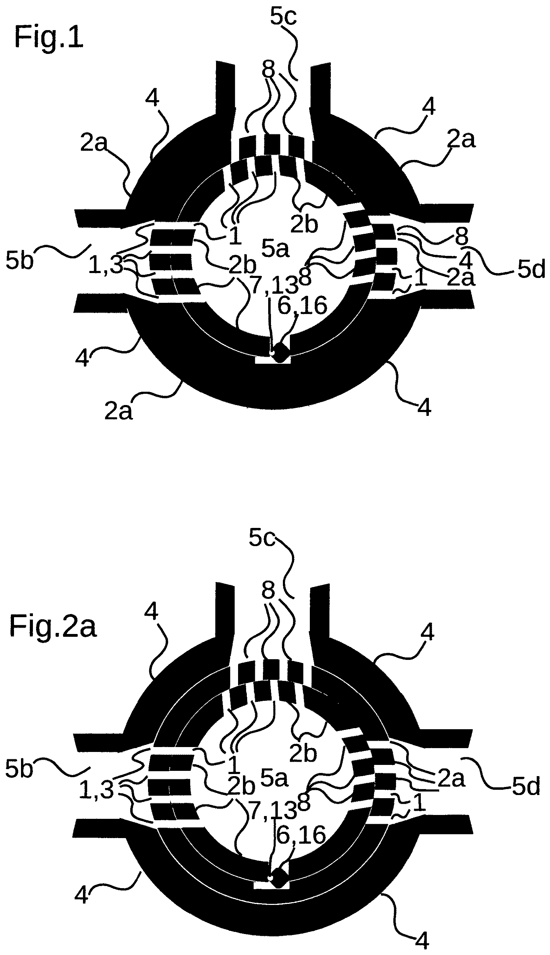

Für das Ersteuern von Durchlassöffnungen für verschiedene Zu-/Ableitungsöffnungen bei unterschiedlichen Ventilstellungen müssen die Durchlassaussparungen für die verschiedenen Zu-/Ableitungsöffnungen bei den verschiedenen aneinander liegenden Trennvorrichtungen unterschiedlich weit voneinander entfernt sein, u.a. auch abhängig davon, ob die Durchlassöffnungen zu den verschiedenen Zu-/Ableitungsöffnungen überlappend geschlossen und geöffnet werden sollen oder über ein vollständiges zwischenzeitliches Verschließen. Bei den Durchlassaussparungen gem. der Figuren 1 bis 3 und 9 ist dies gut zu erkennen. Ferner werden diese Abstände auch durch die gewünschte Öffnungsreihenfolge beim Verstellen des Ventils wesentlich bestimmt. Durch Anpassung dieser Abstände ist es bei erfindungsgemäßen Ventilen möglich die Öffnungsreihenfolge der Zu-/Ableitungsöffnungen beim Verstellen des Ventils festzulegen. Auch können verschiedene oder sogar alle Kombinationen geöffneter Zu-/Ableitungsöffnungen durch eine passende Ausbildung und Anordnung der Durchlassaussparungen erzielt werden. Ggf. muss dafür die Größe von Durchlassaussparungen angepasst werden. Oder es müssen dafür zusätzliche Durchlassaussparungen angeordnet sein. Passend dazu und abhängig von der Größe und der Position der Durchlassaussparungen und der Öffnungsreihenfolge und -systematik der Zu-/Ableitungsöffnungen sind die Aussparungsbrücken ausgebildet und angeordnet. Durchlassaussparungen und Aussparungsbrücken müssen somit aufeinander und auf die Anforderungen an das jeweilige erfindungsgemäße Ventil abgestimmt ausgebildet und angeordnet sein.

Neben dem einzelnen oder kombinierten Öffnen der Zu-/Ableitungsöffnungen ist es auch möglich die Trennvorrichtungen, die Durchlassaussparungen, die Aussparungsbrücken und die wenigstens eine Stellvorrichtung so anzuordnen, auszubilden und einzurichten, dass die Trennvorrichtungen mithilfe der wenigstens einen Stellvorrichtung für wenigstens eine der Zu-/Ableitungsöffnungen zeitgleich keine Durchlassöffnungen ausbildend relativ zueinander reversibel positionierbar sind. So kann ein erfindungsgemäßes Ventil auch so eingerichtet sein, dass eine Ventilstellung ohne Durchlassöffnungen ersteuerbar ist, womit das Ventil vollständig geschlossen ist.

Ein erfindungsgemäßes Ventil kann auch wenigstens zwei - bezogen auf die Strömungsrichtung des Fluids bei einem Zu-/Ableiten durch die Durchlassöffnungen - nebeneinander angeordnete Trennvorrichtungen aufweisen, wodurch sich weitere Variationsmöglichkeiten zur Steuerung komplexer Ventile ergeben. Denn so lassen sich zwei Bereiche des Ventils unabhängig voneinander steuern.

Auch das Ventilgehäuse eines erfindungsgemäßen Ventils kann an seiner Innenseite als eine der wenigstens zwei Trennvorrichtungen ausgebildet und angeordnet sein und entsprechend wenigstens eine Trennvorrichtung im Wesentlichen dichtend an dieser Innenseite des Ventilgehäuses anliegen.

Bei erfindungsgemäßen Ventilen ist es möglich, dass der Bereich möglicher Durchlassöffnungen für eine bestimmte Zu-/Ableitungsöffnung inklusive der dazwischen angeordneten dazugehörigen Aussparungsbrücken sich über einen Bereich erstreckt, der über den Zugang zu dieser Zu-/Ableitungsöffnung hinaus geht. Für solche erfindungsgemäßen Ventile ist eine einfache Lösung, für diese wenigstens eine Zu-/Ableitungsöffnung wenigstens einen Verbindungskanal zwischen der Außenseite der - für diese wenigstens eine Zu-/Ableitungsöffnung - angeordneten Durchlassaussparungen der äußeren Trennvorrichtung und der entsprechenden Zu-/Ableitungsöffnung auszubilden und anzuordnen. Insbesondere können so große Volumenströme bei kleinen Ventilgehäusen realisiert werden.

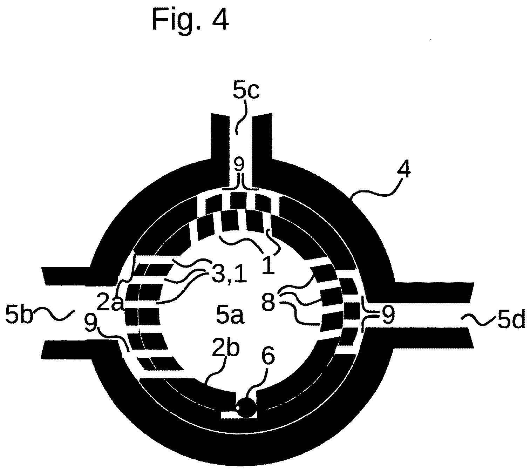

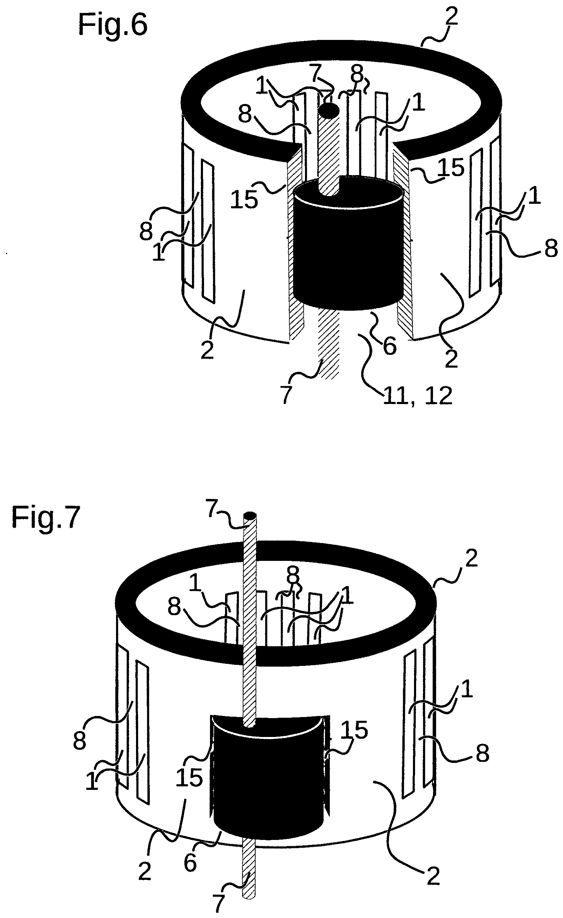

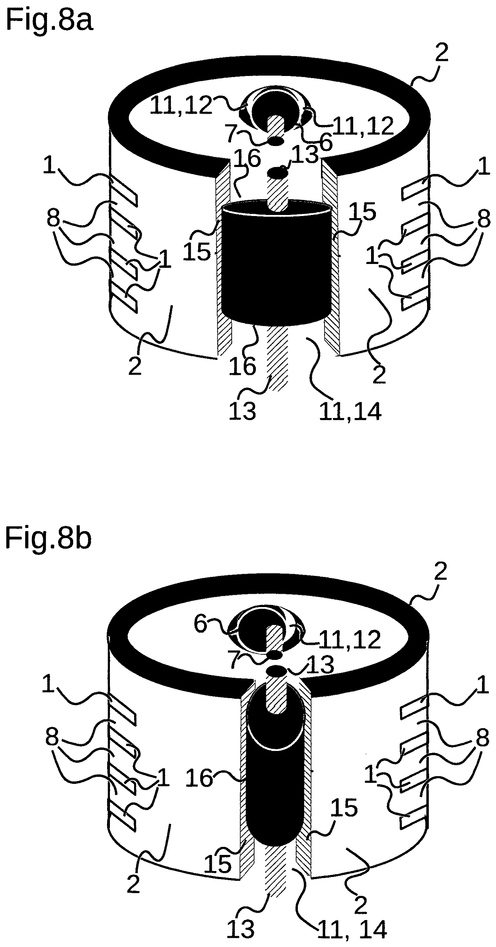

Bei einer besonders bevorzugten Ausführungsform eines erfindungsgemäßen Ventils ist wenigstens eine der Trennvorrichtungen als Kreisbogen ausgebildet. Als Kreisbogen im Sinne dieser Patentanmeldung ist in dieser Patentanmeldung immer ein dickwandiger Hohlzylinder bezeichnet, bei dem - von der Stirnseite betrachtet - ein Teil des ringartigen Kreises fehlt und der aufgrund seiner Wandstärke somit, von der Stirnseite aus betrachtet, wie ein ringartiger Kreisbogen aussieht. Der zum Vollkreis fehlende Kreisbogenteil bildet vorzugsweise eine Vorrichtungsaussparung aus, ist also beispielsweise als eine Stellvorrichtungsaussparung zur Anordnung der wenigstens einen Stellvorrichtung - wie in den Figuren 4 und 6 gezeigt - ausgebildet oder gleichzeitig zusätzlich - wie in den Figuren1 bis 3 gezeigt - als eine kombinierte Stell-Anpressvorrichtungsaussparung zur Anordnung einer kombinierten Stell-Anpressvorrichtung oder alternativ - wie in Figur 8 gezeigt - als reine Anpressvorrichtungsaussparung zur Anordnung einer Anpressvorrichtung. Zusätzlich sind auch in solchen "Kreisbögen" als Trennvorrichtung Durchlassaussparungen und Aussparungsbrücken angeordnet. Bei Anordnung einer kombinierten Stell-Anpressvorrichtung oder bei Anordnung einer reinen Anpressvorrichtung in der Vorrichtungsaussparung einer als Kreisbogen ausgebildeten Trennvorrichtung ist es vorteilhaft, dass eine solche Trennvorrichtung für radiale Krafteinwirkungen elastisch ausgebildet ist. So kann die Krafteinwirkung einer Anpressvorrichtung umgeleitet werden und zu einer Anpressdruckerhöhung bei der gesamten Trennvorrichtung führen. Bei reduzierter Krafteinwirkung durch eine Anpressvorrichtung lassen sich die Trennvorrichtungen durch den dann reduzierten Anpressdruck relativ zueinander leichtgängiger positionieren/verstellen.

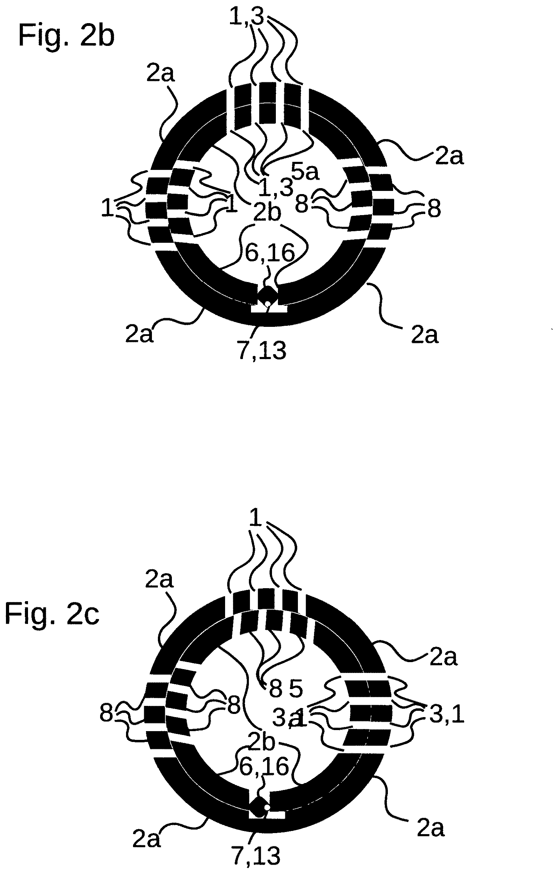

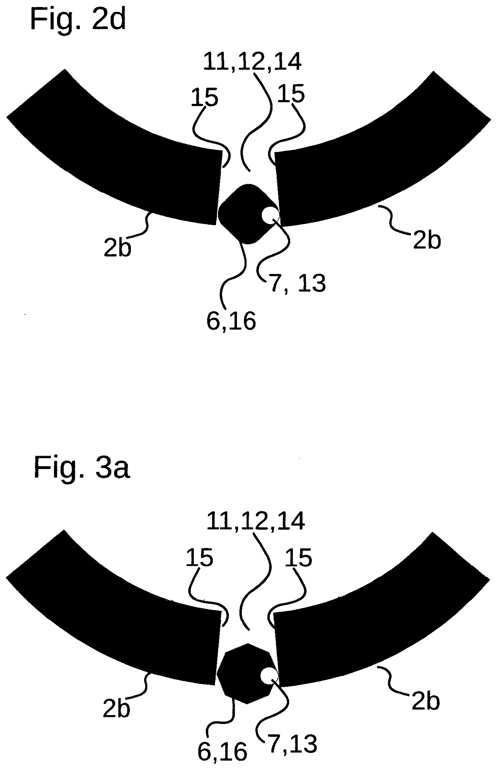

Die Ausbildung einer Trennvorrichtung als Hohlzylinder kann auch notwendig oder vorteilhaft sein, insbesondere dann, wenn - wie in den Figuren 2, 3 und 4 als Trennvorrichtung 2a gezeigt - diese Trennvorrichtung fest im Ventilgehäuse angeordnet ist. Auch eine solche Trennvorrichtung als Hohlzylinder weist die notwendigen Durchlassaussparungen auf. Auch kann sie zusätzlich eine Vorrichtungsaussparung aufweisen, beispielsweise eine Stellvorrichtungsaussparung für eine Stellvorrichtung, wie in Figur 7 gezeigt. Vorteilhaft kann bei solchen Ausführungen die Verwendung eines dehnelastischen Materials im Bereich der Vorrichtungsaussparung sein. Dann könnte, wenn auch der restliche Hohlzylinder radial elastisch ausgebildet ist, die Vorrichtungsaussparung sowohl als kombinierte Stell-Anpressvorrichtungsaussparung als auch als reine Anpressvorrichtungsaussparung ausgebildet sein.

Leichtgängige erfindungsgemäße Ventile sind nicht abhängig von einer bestimmten Ausführungsform bezüglich der Trennvorrichtungen und der relativen Verstellbarkeit zueinander. Das Ventilgehäuse, die wenigstens eine Stellvorrichtung und die wenigstens zwei Trennvorrichtungen können so angeordnet, ausgebildet und eingerichtet sein, dass die Trennvorrichtungen in ihrer Position relativ zueinander radial (wie in den Figuren 1 bis 4, 6 und 7 gezeigt), oder axial (wie in Figur 8 gezeigt), oder radial und axial (übertragen von Figur 9, wie bei Figur 9 erläutert), oder durch Verschiebung in einer Ebene (wie in Figur 9 gezeigt) verstellbar sind.

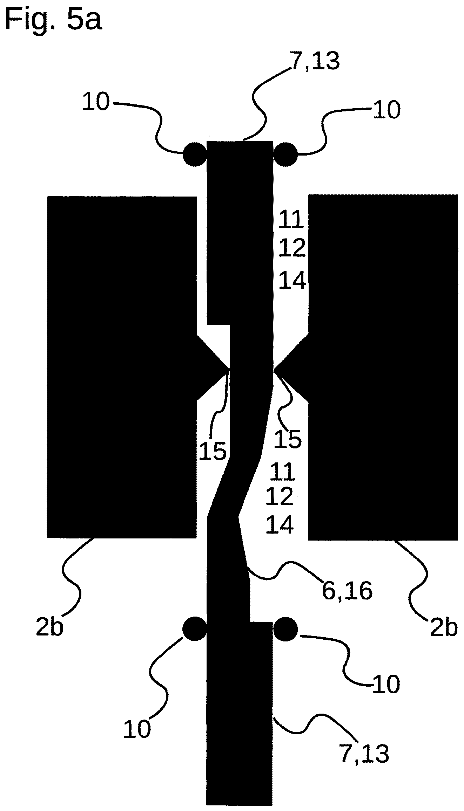

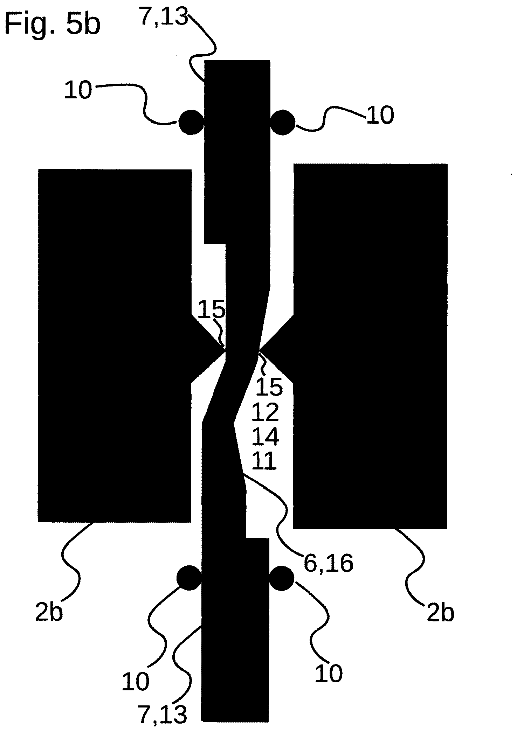

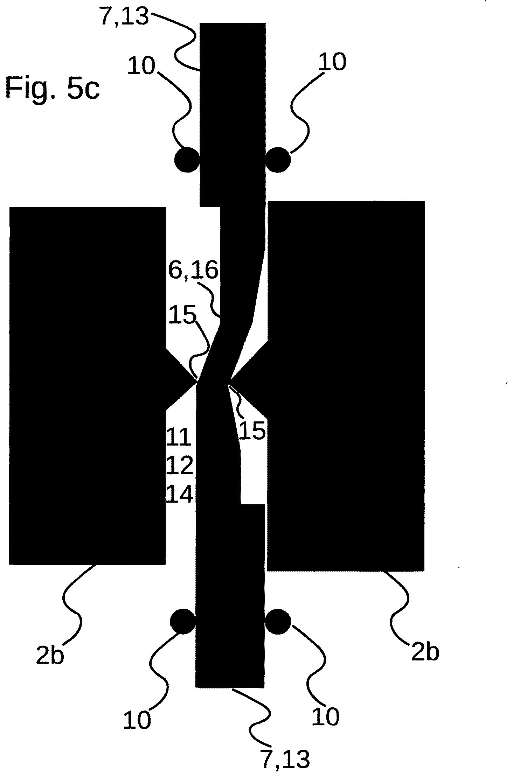

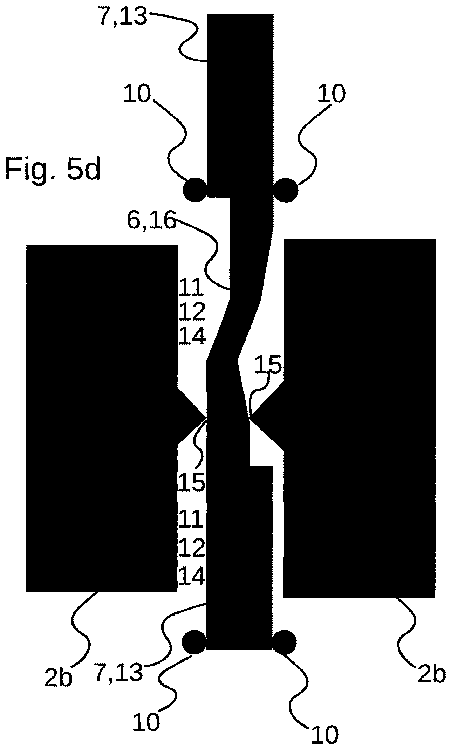

Zum leichten Verstellen der Trennvorrichtungen kann vorteilhaft in Stellvorrichtungsaussparungen erfindungsgemäßer Ventile wenigstens eine der wenigstens einen Stellvorrichtung zwischen zwei Kontaktbereiche der Trennvorrichtung angeordnet sein. Diese Kontaktbereiche sind die Bereiche der Trennvorrichtung, welche an die Stellvorrichtungsaussparung angrenzen und welche von der Stellvorrichtung berührt werden, bzw. berührt werden können. Der Kontaktbereich kann jeweils ein einziger (wie in Figur 5 gezeigt) oder mehrere einzelne Kontaktpunkte, eine Kontaktlinie (wie in den Figuren 1 bis 4, 6, 7, 8 und 9) oder eine Kontaktfläche sein, abhängig von der Form der Stellvorrichtung und dem an diese angrenzenden Enden der Trennvorrichtung. Damit mit Stellvorrichtungen verschiedene Soll-Ventilstellungen ersteuerbar sind, weist wenigstens eine der wenigstens einen Stellvorrichtung zudem für verschiedene Soll-Ventilstellungen und den für diese Soll-Ventilstellungen eingerichteten Stellungen der Stellvorrichtung, zur Ersteuerung der Soll-Ventilstellungen passende unterschiedliche Abstände zwischen der Stellvorrichtungsverstellachse und den Kontaktstellen der Stellvorrichtung mit den oben erläuterten Kontaktbereichen der Trennvorrichtung auf.

In einer Stellvorrichtungsaussparung einer Trennvorrichtung eines erfindungsgemäßen Ventils kann vorteilhaft wenigstens eine der wenigstens einen um ihre Stellvorrichtungsverstellachse drehbare Stellvorrichtung angeordnet sein (wie in den Figuren 1 bis 4 und 6 bis 9 gezeigt). Damit die Trennvorrichtung beim Drehen/Verstellen der Stellvorrichtung auch verstellt wird, ist die Stellvorrichtungsverstellachse nicht mittig angeordnet. Sowohl Form und Größe der Stellvorrichtung als auch die Position der Stellvorrichtungsverstellachse haben Einfluss darauf, wie leicht sich die Stellvorrichtung drehen/verstellen lässt und wie groß die Stellwege sind. Alternativ kann es auch vorteilhaft sein, wenn wenigstens eine der wenigstens einen Stellvorrichtung entlang ihrer Stellvorrichtungsverstellachse axial verschiebbar in der Stellvorrichtungsaussparung der Trennvorrichtung angeordnet ist (wie in Figur 5 gezeigt). Dabei befindet sich ggf. jeweils nur ein Teilabschnitt der Stellvorrichtung innerhalb der Stellvorrichtungsaussparung der Trennvorrichtung. Dies insbesondere dann, wenn eine solche Stellvorrichtung eine besonders lange Form hat. Dies kann wiederum notwendig sein und ist ggf. vorteilhaft, weil sich die zum Verstellen/Verschieben der Trennvorrichtung notwendigen Formänderungen der Stellvorrichtung über eine größere Distanz erstrecken und sich die Trennvorrichtung somit leichter verstellen/verschieben lässt, unter Inkaufnahme größerer Stellwege der Stellvorrichtung.

Besonders vorteilhaft ist die Anordnung einer steuerbaren Anpressvorrichtung zum reversiblen Ersteuern einer Druckkraft auf die wenigstens eine reversibel verstellbare Trennvorrichtung in einem erfindungsgemäßen Ventil, so dass zwischen den - im Wesentlichen dichtend aneinander liegenden - Trennvorrichtungen und/oder zwischen wenigstens einer - im Wesentlichen dichtend an der Innenseite des Ventilgehäuses anliegenden - Trennvorrichtung und der Innenseite des Ventilgehäuses ein Anpressdruck, bzw. größerer oder kleinerer Anpressdruck, reversibel ersteuerbar ist, wobei die steuerbare Anpressvorrichtung nicht mit der reversibel verstellbaren Trennvorrichtung fixiert angeordnet ist. Wirkt kein hoher Anpressdruck, so lassen sich die wenigstens zwei - im Wesentlichen dichtend aneinander liegenden - Trennvorrichtungen in ihrer relativen Position zueinander leichter durch die o.g. Stellvorrichtung verstellen/verschieben. Da die Trennvorrichtungen sich dadurch leichter verstellen/verschieben lassen, sind diese Vorgänge schneller durchführbar. Wirkt hingegen ein hoher Anpressdruck, was insbesondere in den Soll-Ventilstellungen oder wenn die Trennvorrichtungen gerade nicht relativ zueinander verstellt/verschoben werden vorteilhaft ist, dann ist die dichtende Wirkung der Trennvorrichtungen größer, vorzugsweise vollständig.

Bei einem Anpressen einer Trennvorrichtung bewegt sich diese Trennvorrichtung minimal parallel zur Strömungsrichtung (oder potenziellen Strömungsrichtung) des Fluids und wird, dort wo keine Durchlassöffnungen ersteuert sein sollen, mit ihren Aussparungsbrücken auf Durchlassaussparungen der anderen Trennvorrichtung gepresst, was für die dort angeordnete Zu-/Ableitungsöffnung zum vorzugsweise vollständigen Abdichten/Schließen führt.

Eine in der Anpressvorrichtungsaussparung der Trennvorrichtung angeordnete Anpressvorrichtung kann entweder um ihre Anpressvorrichtungsverstellachse drehbar (wie in den Figuren 1 bis 3 als kombinierte Stell-Anpressvorrichtung und in der Figur 8 als reine Anpressvorrichtung gezeigt) oder entlang ihrer Anpressvorrichtungsverstellachse axial verschiebbar (wie in Figur 5 als kombinierte Stell-Anpressvorrichtung gezeigt) angeordnet sein.

In einer besonders bevorzugten Ausführung ist wenigstens eine der wenigstens einen Stellvorrichtung zusätzlich als Anpressvorrichtung ausgebildet, angeordnet und eingerichtet, so wie in den Figuren 1 bis 3 und 5 gezeigt. Außerdem ist bei den Figuren 1 bis 3 und 5 gezeigt, dass die Anpressvorrichtung und die Stellvorrichtung so ausgebildet und angeordnet sind, dass die Position der Anpressvorrichtungsverstellachse der Position der Stellvorrichtungsverstellachse entspricht. Eine solche kombinierte Stell-Anpressvorrichtung ist besonders vorteilhaft, da nur eine Vorrichtung für beide Aufgaben benötigt wird. Durch die Form der Stellvorrichtung kann - wenn Stell- und Anpressvorrichtung beide radial oder beide axial verstellbar sind - zudem gewährleistet werden, dass beim Verstellen/Verschieben der Trennvorrichtung der Anpressdruck und somit auch der Reibungswiderstand immer geringer ist als in den Soll-Ventilstellungen; das Ventil lässt sich deshalb leichter und/oder schneller verstellen. Ferner liegen die Trennvorrichtungen in den Soll-Ventilstellungen immer besonders gut dichtend aneinander.

Anpressvorrichtungen oder kombinierte Stell-Anpressvorrichtungen, die - bei als Kreisbogen oder Hohlzylinder ausgebildeten Trennvorrichtungen - in einer Anpressvorrichtungsaussparung zwischen den beiden Kontaktbereichen einer Trennvorrichtung angeordnet sind, sollten so ausgebildet, angeordnet und eingerichtet sein, dass die Kontaktbereiche der Trennvorrichtung durch verschiedene Stellungen der Anpressvorrichtung oder kombinierten Stell-Anpressvorrichtung unterschiedlich weit voneinander entfernt positionierbar sind. Bezogen auf Ventile mit Soll-Ventilstellungen und radial elastisch als Kreisbogen oder Hohlzylinder ausgebildeten Trennvorrichtungen sollte die wenigstens eine Anpressvorrichtung oder kombinierte Stell-Anpressvorrichtung so ausgebildet, angeordnet und eingerichtet sein, dass die Kontaktbereiche der Trennvorrichtung in Soll-Ventilstellungen weiter voneinander entfernt sind als in anderen Ventilstellungen. Auch dadurch wird das Verstellen erfindungsgemäßer Ventile erleichtert.

Soll das Ventil keine vorgegebenen Soll-Ventilstellungen aufweisen, sondern frei wählbare, variable Ventilstellungen einnehmen können, dann sind getrennt steuerbare Anpressvorrichtungen und Stellvorrichtungen vorteilhaft. Dann kann für jeden Ventilverstellvorgang der Anpressdruck reduziert werden, egal aus welcher oder in welche Ventilstellung das Ventil verstellt werden soll. Eine für ein solches Ventil beispielhaft geeignete Trennvorrichtung mit Stellvorrichtung und Anpressvorrichtung ist in Figur 8 gezeigt. Noch vorteilhafter ist in einer radial elastischen und als Kreisbogen oder Hohlzylinder ausgebildeten Trennvorrichtung eine kombinierte Stell-Anpressvorrichtung die so geformt ausgebildet, angeordnet und eingerichtet ist, dass die Stellvorrichtung radial durch ein Drehen um die Stellvorrichtungsverstellachse verstellt wird und die Anpressvorrichtung axial durch ein Verschieben entlang der Anpressvorrichtungsverstellachse, oder umgekehrt, wobei die Stellvorrichtungsverstellachse und die Anpressvorrichtungsverstellachse vorzugsweise eine identische Position aufweisen. Ist eine solche Ventilausführung ohne festgelegte Soll-Ventilstellungen mit einer kombinierten Stell-Anpressvorrichtung vorgesehen, so gibt es folgende vorteilhafte Ausführungsform: Eine kreisbogenförmige Trennvorrichtung gem. den Patentansprüchen 7 und 8, oder eine hohlzylinderförmige Trennvorrichtung gem. Patentanspruch 9 mit elastischer Wandung im Bereich der kombinierten Stell-Anpressvorrichtung, mit einer in der kombinierten Stell-Anpressvorrichtung radial zu verstellenden Stellvorrichtung und einer axial zu verstellenden Anpressvorrichtung, angeordnet in der Stellvorrichtungsaussparung der Trennvorrichtung, die auch gleichzeitig Anpressvorrichtungsaussparung in der Trennvorrichtung ist. Wenn die an der Trennvorrichtung angeordneten Kontaktbereiche/Kontaktpunkte für die kombinierte Stell-Anpressvorrichtung passend ausgebildet/geformt sind, dann kann durch eine axiale Verstellung der kombinierten Stell-Anpressvorrichtung die Anpressvorrichtung und durch eine radiale Verstellung der kombinierten Stell-Anpressvorrichtung die Stellvorrichtung gesteuert werden, oder umgekehrt. In einer noch weiter entwickelten Ausbildung kann die kombinierte Stell-Anpressvorrichtung wie beschrieben arbeitend zudem durch einen einzigen Motor oder anderen Aktuator oder durch eine einzige manuelle Handbewegung wirken; dafür muss zu Beginn des Verstellens durch die Ausbildung/Form im Bereich der Kraftübertragung vom Motor/Aktuator/Handhebel o.ä. auf die Stellvorrichtung vorzugsweise vor der - wenigstens aber zeitgleich mit der - Radialverstellung eine Axialverschiebung durchgeführt werden und nach der Beendigung des Verstellens der Stellvorrichtung umgekehrt. Oder sinngemäß umgekehrt bei radial verstellbarer Anpressvorrichtung und axial verstellbarer Stellvorrichtung.

Ganz allgemein gilt aber für alle erfindungsgemäßen Ventile mit Anpressvorrichtung und Stellvorrichtung, dass sowohl die wenigstens eine Anpressvorrichtung als auch die wenigstens eine Stellvorrichtung so ausgebildet, angeordnet und eingerichtet sein sollten, dass während einer Positionsveränderung der Trennvorrichtungen relativ zueinander ein reduzierter Anpressdruck zwischen diesen Trennvorrichtungen ersteuerbar ist. Um dies zu erreichen gibt es verschiedene Lösungen. So können die wenigstens eine Anpressvorrichtung und die wenigstens eine Stellvorrichtung elektronisch abgestimmt ansteuerbar oder mechanisch bewegungsgekoppelt sein. Eine elektronisch abgestimmt ansteuerbare Ausführung bietet sich insbesondere bei Einsatz von Elektromotoren oder anderen Aktoren zum Verstellen des Ventils an. Eine mechanisch bewegungsgekoppelte Ausführung kann sowohl bei einem manuell als auch bei einem mit Elektromotoren zu verstellenden Ventil gewählt werden; beispielsweise können die Verstellachsen für diesen Zweck über Zahnräder bewegungsgekoppelt verbunden sein. Die dritte Möglichkeit ist, dass die wenigstens eine Anpressvorrichtung und die wenigstens eine Stellvorrichtung als ein kombiniertes Bauteil mit entsprechender Form ausgebildet sind, beispielhaft so wie bei der kombinierten Stell-Anpressvorrichtung gem. der Figuren 1 bis 3 und 5.

Neben den schon erwähnten Verstellantriebsmöglichkeiten eines erfindungsgemäßen Ventils (manuell oder mit Hilfe von Elektromotoren), kann auch ein Verstellen mit Hilfe eines Stellzylinders oder eines thermischen Ausdehnungselementes vorteilhaft oder notwendig sein, beispielsweise bei Verwendung eines erfindungsgemäßen Ventils als thermostatischer Mischer. Bei solchen erfindungsgemäßen Ventilen als thermostatische Mischer können, trotz typischerweise kurzer Stellwege thermischer Ausdehnungselemente, aufgrund der kürzeren Stellwege erfindungsgemäßer Ventile große Volumenströme gesteuert werden.

In Figur 8 sind die Anpressvorrichtung und die Stellvorrichtung beide radial um ihre jeweiligen Verstellachsen verstellbar ausgebildet, angeordnet und eingerichtet. Es sind aber auch Ausführungen möglich, bei der eine der beiden Vorrichtungen radial um ihre Verstellachse und die andere axial entlang ihrer Verstellachse verstellbar ausgebildet, angeordnet und eingerichtet sind; oder beide axial entlang ihrer Verstellachse.

Bei einem erfindungsgemäßen Ventil kann in einer bevorzugten Ausführungsform eine elektronische Steuerungseinheit und wenigstens ein Sensor zur Ermittlung der Stellung von Trennvorrichtungen und/oder Stellvorrichtungen und/oder Anpressvorrichtungen angeordnet und eingerichtet sein; alternativ oder zusätzlich kann dann mithilfe der elektronischen Steuerung und wenigstens einem Sensor die Ansteuerung von Elektromotoren zur Ersteuerung von Ventilstellungen ermöglicht werden. So kann auch gewährleistet werden, dass während eines Ventilverstellvorgangs die Anpressvorrichtung zuverlässig keinen starken Anpressdruck bewirkt und sich dadurch das Ventil zum richtigen Zeitpunkt leicht verstellen lässt, bzw. die Trennvorrichtungen sich besonders leicht relativ zueinander verstellen/verschieben lassen oder die Trennvorrichtungen besonders dichtend aneinander liegen. Als Sensoren haben sich bei vielen Ventilen Potentiometer bewährt. Auch können die Sensoren eines Encodermotors für diesen Zweck genutzt werden, indem sie indirekt aus der Motorstellung auf die Ventilstellung schließen lassen.

Die sich berührenden Bereiche der Trennvorrichtungen erfindungsgemäßer Ventile können vorzugsweise mit einem Material - einseitig oder beidseitig - beschichtet sein, welches besser dichtend aneinander liegt als es die Trennvorrichtungen ohne diese Beschichtung täten, wobei die Trennvorrichtungen sich bei weniger starkem Anpressdruck trotzdem noch relativ leicht gegeneinander verschieben lassen. Bei einseitiger Beschichtung wäre es vorteilhaft, wenn die Beschichtung weicher wäre - beispielsweise Gummi - und die an diese Beschichtung anliegende Oberfläche der anderen Trennvorrichtung kleine Hervorhebungslinien aus der Oberfläche aufweist; diese Hervorhebungen würden sich bei gleichem Anpressdruck wesentlich stärker in die weichere Beschichtung drücken als größere Flächen und sehr effektiv abdichten. Oder die Oberfläche der Trennvorrichtungen ist gegeneinander so ausgeprägt/ausgebildet, dass ein Überströmen minimiert wird.

In einer bevorzugten Ausführungsform eines erfindungsgemäßen Ventils sind die Trennvorrichtungen und/oder die Stellvorrichtungen und/oder die Anpressvorrichtungen im Ventilgehäuse ganz oder teilweise austauschbar ausgebildet und angeordnet. So können sowohl defekte Teile als auch Teile in etwas anderer Ausbildung ausgetauscht werden. Soll beispielsweise das Verstellen noch leichter möglich sein, kann eine etwas andere Anpressvorrichtung eingebaut werden. Oder auch andere Trennvorrichtungen mit beispielsweise größeren Durchlassaussparungen und dazu passender Stellvorrichtung. Oder andere Trennvorrichtungen, die andere Öffnungs- und Schließkombinationen zu den Zu-/Ableitungsöffnungen ermöglichen.

Erfindungsgemäße Ventile können besonders vorteilhaft bei Fluidspeichern eingesetzt werden, welche über gesteuerte Zu- und Ableitungen mit einem Leitungssystem verbunden sind. Wenn ein Fluidspeicher ein oder mehr erfindungsgemäße Ventile umfasst, dann kann durch das leichte und schnelle Verstellen der erfindungsgemäßen Ventile das Zu- und Ableiten besonders schnell und mit wenig Kraftaufwand durchgeführt werden. So kann dem Fluidspeicher Fluid in verschiedenen Bereichen des Fluidspeichers zugeführt oder aus verschiedenen Bereichen abgeleitet werden. Ein häufiger Anwendungsfall sind beispielsweise Heizungswasserspeicher, insbesondere Schichtenspeicher, denen in verschiedenen Höhenbereichen Heizungswasser mit einer Wunschtemperatur entnommen oder auch Heizungswasser entsprechend seiner Temperatur höhenabhängig zugeführt, ggf. aber auch gestoppt werden können soll. Ein weiterer Einsatzbereich erfindungsgemäßer Ventile sind Wasserspeicher, welche verschiedene Kammern für Wasser unterschiedlicher Temperatur aufweisen. Auch dort ermöglichen erfindungsgemäße Ventile ein leichtes und schnelles Umschalten oder Stoppen beim Zuleiten von Leitungswasser in die Kammern des Wasserspeichers.

### Kurzbeschreibung der Zeichnungen

Weitere Ziele, Merkmale, Vorteile und Anwendungsmöglichkeiten des erfindungsgemäßen Ventils ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung

### Ausführung der Erfindung

In **Figur** 1 ist eine schematische Darstellung des Querschnitts eines erfindungsgemäßen Ventils gezeigt. Dabei handelt es sich um ein Ventil mit insgesamt vier Zu-/Ableitungsöffnungen 5a bis 5d, wobei durch die Zu-/Ableitungsöffnung 5a - hier beispielhaft nur durch die Ziffer 5a angedeutet - von hinten oder vorne Fluid in die Mitte des Ventils zu- oder ableitbar ist; das Zu- oder Ableiten durch die Zu-/Ableitungsöffnung 5a ins oder aus dem Ventil wird hier somit beispielhaft nicht durch eine Trennvorrichtung gesteuert. Zur besseren Übersichtlichkeit sind, so wie auch in den folgenden Figuren, nicht alle Durchlassaussparungen 1 und Aussparungsbrücken 8 mit Ziffern versehen; für den Betrachter sind aber alle Durchlassaussparungen 1 und Aussparungsbrücken 8 leicht erkennbar. Das Ventilgehäuse 4 ist in dieser Figur 1 an seiner Innenseite als Trennvorrichtung 2a ausgebildet. Somit sind die äußeren Aussparungsbrücken 8 als Teil der Trennvorrichtung 2a auch Teil der Innenseite des Ventilgehäuses 4. Die zweite Trennvorrichtung 2b liegt im Wesentlichen dichtend an der Innenseite des Ventilgehäuses 4 als Trennvorrichtung 2a. Der feine Spalt zwischen der Trennvorrichtung 2b und der Innenseite des Ventilgehäuses 4 als Trennvorrichtung 2a dient in den Figuren jeweils lediglich der Veranschaulichung der Unterscheidung der Trennvorrichtungen 2b und 2a. Bei der Zu-/Ableitungsöffnung 5b überlagern sich in dieser Figur 1 die jeweils vier Durchlassaussparungen 1 der beiden Trennvorrichtungen 2a und 2b vollständig, wodurch hier vier maximal große, bzw. maximal geöffnete Durchlassöffnungen ausgebildet sind. Bei den Zu-/Ableitungsöffnungen 5c und 5d sind keine Durchlassöffnungen 3 ausgebildet, da die Aussparungsbrücken 8 der Trennvorrichtung 2b die Durchlassaussparungen 1 der Trennvorrichtung 2a abdecken und die Aussparungsbrücken 8 der Trennvorrichtung 2a die Durchlassaussparungen 1 der Trennvorrichtung 2b abdecken. Es kann somit kein Fluid durch die Zu-/Ableitungsöffnungen 5c und 5d strömen. Bezogen auf die Strömungsrichtung des Fluids bei einem Zu- oder Ableiten durch die Durchlassöffnungen 3 sind hier somit beispielhaft lediglich zwei Trennvorrichtungen 2a und 2b hintereinander angeordnet. Die Innenseite des Ventilgehäuses 4 als Trennvorrichtung 2a ist hier als Hohlzylinder ausgebildet. Diese Trennvorrichtung 2a weist insgesamt zwar zwölf Durchlassaussparungen 1 auf, da diese aber alle nicht über die gesamte Breite der Trennvorrichtung 2a verlaufen ist die Trennvorrichtung 2a nicht unterbrochen. Die Stellvorrichtung 6 ist in diesem Ausführungsbeispiel zusätzlich als Anpressvorrichtung 16 ausgebildet ; Stellvorrichtungsverstellachse 7 und Anpressvorrichtungsverstellachse 13 haben die gleiche Position.

Die Stellvorrichtung 6 und die Anpressvorrichtung 16 befinden sich mit ihren Verstellachsen in der Stellvorrichtungsaussparung 12, bzw.

Anpressvorrichtungsaussparung 14 als Vorrichtungsaussparung 11, wobei die beiden Vorrichtungsaussparungen 11 Stellvorrichtungsaussparung 12 und Anpressvorrichtungsaussparung 13 in dieser Figur 1 zur besseren Übersichtlichkeit nicht mit Bezugszeichen versehen sind. Gleiches gilt für die beiden Kontaktbereiche 15 an den beiden Enden der Trennvorrichtung 2b. Diese fehlenden Bezugszeichen und deren Zuordnung können von der vergrößerten Teilabbildung gem. Figur 2d auf diese Figur 1 übertragen, bzw. zur Betrachtung übernommen werden.

Die Trennvorrichtung 2b ist im Bereich der beiden Vorrichtungsaussparungen 11 unterbrochen und bildet somit einen Kreisbogen aus, welcher für radiale Krafteinwirkungen elastisch ausgebildet ist. Bewegliche Teile sind in dieser Figur 1 die kombinierte Stellvorrichtung 6 - Anpressvorrichtung 16, drehbar um die beiden Achsen Stellvorrichtungsverstellachse 7 und Anpressvorrichtungsverstellachse 13, welche die gleiche Position haben, und die Trennvorrichtung 2b. Die relative Position der beiden Trennvorrichtungen 2a und 2b zueinander kann durch ein Verstellen der Trennvorrichtung 2b reversibel verstellt werden, was zu Figur 2 erläutert wird und auf diese Figur 1 übertragbar ist.

Die Stellvorrichtung 6 ist in dieser Figur 1 nicht kreisrund, damit sie zusätzlich als Anpressvorrichtung 16 ausgebildet ist. Auch dazu folgen Erläuterungen in den folgenden Figuren, welche auf diese Figur 1 übertragbar sind.

In dieser Figur 1 ist es für alle Zu-/Ableitungsöffnungen 5b, 5c und 5d möglich, jeweils vier Durchlassöffnungen 3 zu ersteuern. Wäre jeweils nur eine, aber viermal so große Durchlassöffnung vorhanden, wäre bei gleicher Öffnungsgröße ein viermal größerer Verstellweg der Trennvorrichtung 2b notwendig. Entsprechend viermal schneller kann ein erfindungsgemäßes Ventil verstellt, bzw. eingestellt werden, bei gleicher Krafteinwirkung auf die Stellvorrichtung. Oder für ein gleich schnelles Verstellen kann die Stellvorrichtung 6 langsamer bewegt - hier gedreht - werden, was, bei entsprechender Übersetzung oder entsprechendem Hebelarm, entsprechend weniger Kraftaufwand erfordert. Diese Effekte treten bereits bei jeweils wenigstens zwei ersteuerbaren Durchlassöffnungen 3 als Halbierung, bzw. Verdoppelung auf und steigern sich bei noch größerer Anzahl von ersteuerbaren Durchlassöffnungen 3 entsprechend.

Abhängig vom Einsatzzweck benötigt auch nicht immer jede steuerbare Zu-/Ableitungsöffnung eines erfindungsgemäßen Ventils die gleiche Anzahl an möglichen Durchlassöffnungen 3. Entsprechend dem gewünschten Maximaldurchsatz kann bei gleicher Durchlassaussparungsgröße die Anzahl der Durchlassaussparungen passend gewählt werden.

Durch die kleinen Stellwege der Trennvorrichtung 2b könnten in einer Ausführungsform ähnlich der in dieser Figur 1 auch noch mehr Zu-/Ableitungsöffnungen angeordnet sein, insbesondere bei noch kleinerer Größe der Durchlassaussparungen 1. In dieser Figur 1 sind die Aussparungsbrücken 8 wenigstens doppelt so groß wie die Durchlassaussparungen 1. Dies ist durch die Anzahl der Zu-/Ableitungsöffnungen 5b bis 5d bedingt und hier erforderlich, da die Zu-/Ableitungsöffnungen 5b bis 5d ausschließlich einzeln vollständig geöffnet werden können. Das mindestens notwendige Größenverhältnis von Durchlassaussparungen zu Aussparungsbrücken wird durch die Anzahl der Zu-/Ableitungsöffnungen und der Öffnungssystematik - wie viele und welche Zu-/Ableitungsöffnungen sollen gleichzeitig oder einzeln zu öffnen sein - wesentlich bestimmt, bzw. vorgegeben; ggf. auch das vollständige Schließen aller Zu-/Ableitungsöffnungen. Die genaue Anordnung der Durchlassaussparungen und Aussparungsbrücken der verschiedenen Zu-/Ableitungsöffnungen wird zudem wesentlich bestimmt durch die gewünschte Reihenfolge des Öffnens und Schließens der verschiedenen Zu-/Ableitungsöffnungen und ob, bzw. welche gleichzeitig geöffnet oder geschlossen werden können; dabei müssen die betreffenden Zu-/Ableitungsöffnungen nicht nebeneinander angeordnet sein.

Je kleiner die Durchlassaussparungen 1 bei entsprechend größerer Anzahl sind, desto mehr Verstell- oder Einstelloptionen bieten sich für die Herstellung, bzw. Auslegung eines erfindungsgemäßen Ventils.

In **Figur 2** sind schematische Darstellungen des Querschnitts eines weiteren erfindungsgemäßen Ventils gezeigt. Der Aufbau dieses Ventils entspricht im Wesentlichen dem Aufbau des Ventils gem. Figur 1. In dieser Figur 2 ist die Trennvorrichtung 2a allerdings ein eigenständiges Bauteil und ist nicht durch die Innenseite des Ventilgehäuses 4 ausgebildet. Der feine Spalt zwischen der Trennvorrichtung 2a und der Innenseite des Ventilgehäuses 4 soll dies lediglich veranschaulichen. Tatsächlich liegt die Trennvorrichtung 2a im Wesentlichen dichtend an immer der gleichen Position an der Innenseite des Ventilgehäuses 4 an. Bei einem Ventilgehäuse 4 welches sich öffnen lässt können die Trennvorrichtungen 2a und 2b, die Stellvorrichtung 6 und die Anpressvorrichtung 16 ganz oder teilweise austauschbar ausgebildet und angeordnet sein.

In Figur 2a ist die gleiche Ventilstellung abgebildet wie in Figur 1 und zu Figur 1 beschrieben. Auch in dieser Figur 2 ist die Stellvorrichtung 6 zusätzlich als Anpressvorrichtung 16 ausgebildet und in der kombinierten Anpressvorrichtungsaussparung 14 und Stellvorrichtungsaussparung 12 angeordnet. Die Eigenschaft als Anpressvorrichtung 16 ergibt sich bei der Stellvorrichtung 6 aus der Form, welche einem Quadrat mit abgerundeten Ecken entspricht. Dadurch ergibt sich, dass bei verschiedenen Stellungen der Anpressvorrichtung 16 die Kontaktbereiche 15 unterschiedlich weit voneinander entfernt positioniert sind. Liegt eine Diagonale des abgerundeten Quadrates zwischen den Kontaktbereichen 15, so wie in der Figur 2a gezeigt, so werden diese Kontaktbereiche 15 der radial elastischen Trennvorrichtung 2b durch diese radiale Krafteinwirkung weiter voneinander weggedrückt. Dadurch liegt die Trennvorrichtung 2b fester und somit besser abdichtend an der Trennvorrichtung 2a an. Dies sollte vorzugsweise bei allen Soll-Ventilstellungen der Fall sein, was in diesem Ausführungsbeispiel der Figur 2 durch das kombinierte Bauteil Stellvorrichtung 6 und Anpressvorrichtung 16 ermöglicht wird. Die hier gezeigte Form der kombinierten Stell-Anpressvorrichtung ist aber nur beispielhaft und u.a. von der Anzahl der Soll-Ventilstellungen, den gewünschten Anpressdrücken und der gewünschten Anpressdruckreduzierung während eines Verstellvorgangs abhängig. In der Teilansicht gem. Figur 2d sind die Details im Bereich der Stellvorrichtung 6 dieser Figuren 2a bis 2c besser erkennbar und mit Bezugszeichen versehen, welche bei den Figuren 2a bis 2c zur besseren Übersichtlichkeit weggelassen wurden.

Während des Verstellens - hier ein Verdrehen um die kombinierten Stellvorrichtungsverstellachse 7 und Anpressvorrichtungsverstellachse 13 - der kombinierten Stell-Anpressvorrichtung verringert sich der Mindestabstand zwischen den Kontaktbereichen 15 der Trennvorrichtung 2b, da nun nicht mehr eine Diagonale als längste mögliche Distanz zwischen den Kontaktbereichen 15 wirkt. Durch die somit geringere radial wirkende Krafteinwirkung auf die Kontaktbereiche 15 der radial elastischen Trennvorrichtung 2b reduziert sich auch der Reibungswiderstand zwischen den Trennvorrichtungen 2a und 2b, wodurch sich die Trennvorrichtung 2b leichter relativ zur Trennvorrichtung 2a radial verstellen lässt. Dieses Verstellen ergibt sich aus dem Verdrehen der Stellvorrichtung 6 um die Stellvorrichtungsverstellachse 7, da sich nun die Abstände zwischen der Stellvorrichtungsverstellachse 7 und den Kontaktbereichen 15 auf beiden Seiten verändern, was wiederum einem Verschieben der Trennvorrichtung 2b relativ zur Trennvorrichtung 2a entspricht.

In den Figuren 2b und 2c ist zur übersichtlicheren Darstellung das Ventilgehäuse 4 nicht mehr abgebildet. In Figur 2b befindet sich das Ventil in der nächsten Soll-Ventilstellung. Die oberen Durchlassaussparungen 1 überlagern sich nun und bilden entsprechend Durchlassöffnungen 3 aus. Bewirkt wurde dieses radiale Verstellen der Trennvorrichtung 2b durch ein Drehen der Stellvorrichtung 6 um 90 Grad gegen den Uhrzeigersinn um die Stellvorrichtungsverstellachse 7. Auch in dieser Stellung liegt eine Diagonale der Anpressvorrichtung 16 zwischen den Kontaktbereichen 15 der Trennvorrichtung 2b, wodurch die Anpressvorrichtung 16 ihre maximal mögliche radiale Krafteinwirkung entfaltet. Dies wiederum führt zu einem größeren Anpressdruck von der Trennvorrichtung 2b auf die Trennvorrichtung 2a und somit zu einem dichtenderen Anliegen der Trennvorrichtung 2b an der Trennvorrichtung 2a.

In Figur 2c ist die Stellvorrichtung 6 um weitere 90 Grad gegen den Uhrzeigersinn um die Stellvorrichtungsverstellachse 7 gedreht worden. Entsprechend wurde die Trennvorrichtung 2b verstellt und die Durchlassöffnungen 3 haben sich nun bei den rechten Durchlassaussparungen 1 ausgebildet. Auch hierbei handelt es sich um eine Soll-Ventilstellung mit einem entsprechend größeren Anpressdruck und einem dichteren Anliegen der Trennvorrichtung 2b an der Trennvorrichtung 2a.

In Figur 2d ist lediglich eine Teilansicht der Figur 2 abgebildet. Diese Abbildung dient dem deutlicheren Erkennen der Form der Stellvorrichtung 6, die zusätzlich als Anpressvorrichtung 16 ausgebildet ist, und ihrer Anordnung in der Stellvorrichtungsaussparung 12 und Anpressvorrichtungsaussparung 14 als Vorrichtungsaussparungen 11, womit die kombinierte Stell-Anpressvorrichtung zwischen den beiden Kontaktbereichen 15 der Trennvorrichtung 2b angeordnet ist. Eine Vorrichtungsaussparung 11 kann aber - anders als in den Figuren 1 bis 3 und 5 - auch lediglich als Stellvorrichtungsaussparung 12 zur Anordnung einer Stellvorrichtung 6 ausgebildet sein, so wie in den Figuren 4, 6 und 7. Ferner kann die Vorrichtungsaussparung 11 auch lediglich als Anpressvorrichtungsaussparung 14 zur Anordnung einer Anpressvorrichtung 16 ausgebildet sein. Das Verstellen der Trennvorrichtung kann bei einer solchen Ausführung und entsprechend passender Anordnung der Durchlassaussparungen 1 und sonstiger notwendiger Änderungen beispielsweise durch eine axiale Verschiebung erfolgen.

Durch die Anordnung einer steuerbaren Vorrichtung in einer Vorrichtungsaussparung 11 - als Stellvorrichtungsaussparung 12 und/oder Anpressvorrichtungsaussparung 14 - einer reversibel verstellbaren Trennvorrichtung 2b, welche als Kreisbogen ausgebildet ist, wirkt eine von der steuerbaren Vorrichtung - egal ob als Stellvorrichtung 6 und/oder Anpressvorrichtung 16 ausgebildet - auf die Kontaktbereiche 15 ausgeübte Kraft weit entfernt vom Drehpunkt der Trennvorrichtung 2b in der Ventilmitte und somit in unmittelbarer Nähe zu der Trennvorrichtung 2a, an welche die Trennvorrichtung 2b angepresst und/oder zu der die Trennvorrichtung 2b relativ verstellt werden soll. Dadurch ist ein verhältnismäßig geringer Kraftaufwand zum Verstellen notwendig. Ferner kann eine Stellvorrichtung 6 und/oder Anpressvorrichtung 16 beim Wandeln der Drehbewegung in einen Anpressdruck oder eine Verstellbewegung wie eine Übersetzung wirken; Form und (mittlerer) Durchmesser der Stellvorrichtung 6 und/oder Anpressvorrichtung 16 können sich günstig auf den zum Verstellen notwendigen Kraftaufwand auswirken, insbesondere durch kleine Rundungsänderungen.

Anstelle drehbarer Anpress- und/oder Stellvorrichtungen können auch axial verschiebbare Anpress- und/oder Stellvorrichtungen in Vorrichtungsaussparungen 11 angeordnet werden und auf die Kontaktbereiche 15 wirken, so oder ähnlich wie in den Figuren 5a bis 5d gezeigt. Dies gilt allgemein für erfindungsgemäße Ventile.

Bei einer anderen Ausbildung und Anordnung der Durchlassaussparungen 1, Aussparungsbrücken 8 und Stellvorrichtung/Anpressvorrichtung könnte die Trennvorrichtung 2b auch so gesteuert werden, dass sich in einer Ventilstellung keine Durchlassöffnungen 3 ausbilden, das Ventil also vollständig geschlossen ist. Ferner könnte so auch die Öffnungsreihenfolge zu den verschiedenen Zu-/Ableitungsöffnungen 5b bis 5d modifiziert werden. Ebenfalls könnten die Durchlassöffnungen zu verschiedenen Zu-/Ableitungsöffnungen 5b bis 5d zeitgleich und ggf. zusätzlich einzeln geöffnet werden. Die Größe der Durchlassaussparungen 1 und Aussparungsbrücken 8 kann oder muss ggf. modifiziert werden. Die gleich großen Durchlassaussparungen 1 der bisherigen Figuren ist rein zufällig. Die Anmerkungen dieses Absatzes bezüglich der Reihenfolge und möglicher Kombinationen bei angepassten Durchlassaussparungen 1, Aussparungsbrücken 8 und Stellvorrichtung 6 treffen auf alle erfindungsgemäßen Ventile zu.

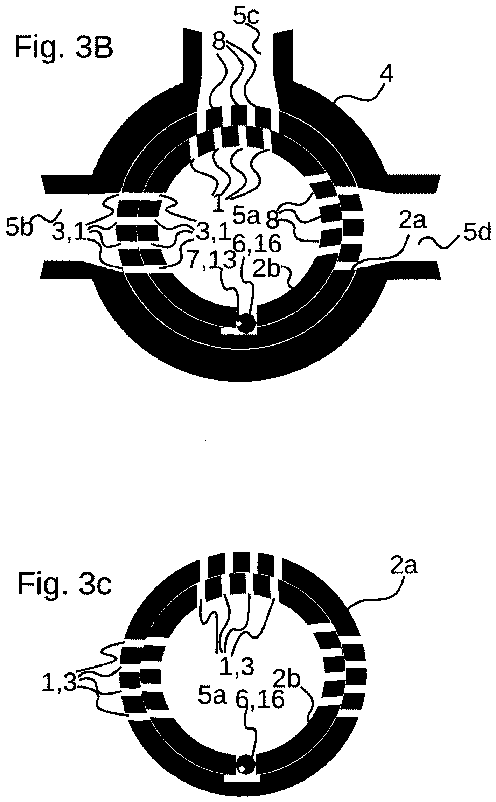

**Figur 3a** ist eine schematische Darstellung einer vergrößerten Teilansicht des Ventils im Bereich der Stellvorrichtung 6, die zugleich auch als Anpressvorrichtung 16 ausgebildet ist. Wie bei den Figuren 1 und 2 ist diese drehbar um die Stellvorrichtungsverstellachse 6, deren Position identisch ist mit der Anpressvorrichtungsverstellachse 13. Anders als in den Figuren 1 und 2 ist die kombinierte Stell-Anpressvorrichtung als Achteck ausgebildet, da das Ventil gem. der Figuren 3b bis 3f insgesamt fünf Soll-Ventilstellungen aufweist. Bei den Figuren 3b bis 3f ist wieder eine schematische Darstellung des Querschnitts eines erfindungsgemäßen Ventils gezeigt. Durch die größere Anzahl an Ecken ist ein Abrunden der Ecken weniger wichtig, wäre aber auch vorteilhaft. Bei den Figuren 3c bis 3f ist wieder das Ventilgehäuse 4 zwecks besserer Übersichtlichkeit nicht abgebildet.

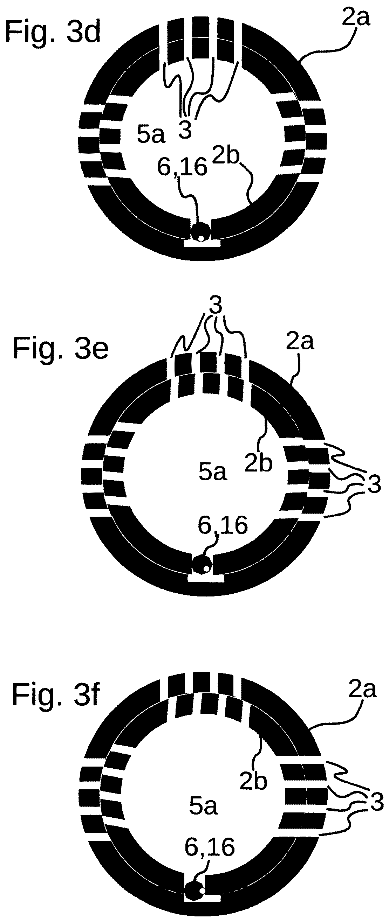

In **Figur 3b** sind die Durchlassöffnungen 3 zur Zu-/Ableitungsöffnung 5b ersteuert, in Figur 3c zu 5b und 5c, in Figur 3d zu 5c, in Figur 3e zu 5c und 5d und in Figur 3f zu 5d.

In **Figur 4** ist wieder die schematische Darstellung des Querschnitts eines erfindungsgemäßen Ventils gezeigt. Die Stellvorrichtung 6 ist hier beispielhaft allerdings ausschließlich als Stellvorrichtung 6 ausgebildet, da durch die vollständig runde Ausbildung der Stellvorrichtung 6 der Abstand zwischen den Kontaktbereichen bei allen möglichen Stellungen der Stellvorrichtung 6 gleich ist. Ansonsten sind die Detaildarstellungen bezüglich des Bereiches der Stellvorrichtung 6 der Figuren 2 und 3 sinngemäß auf diese Figur 4 übertragbar.

Dieses Ventil gem. Figur 4 weist - anders als die vorhergehenden Figuren - zusätzliche Verbindungskanäle 9 auf. Außerdem sind für verschiedene Zu-/Ableitungsöffnungen 5b bis 5d verschieden viele Durchlassöffnungen 3 ersteuerbar. Zu-/Ableitungsöffnung 5b sind sechs mögliche Durchlassöffnungen 3 zugeordnet und den Zu-/Ableitungsöffnungen 5c und 5d jeweils vier. Durch die Größe der Durchlassaussparungen 1 und Aussparungsbrücken 8 ergeben sich hier beispielhaft jeweils weitere Strömungsbereiche als die Weite der entsprechenden Zu-/Ableitungsöffnungen 5b bis 5d. Dies ist durch die Weite der Aussparungsbrücken 8 und der Durchlassaussparungen 1 bedingt. Die Verbindungskanäle 9 zwischen der Trennvorrichtung 2a und dem Ventilgehäuse 4 ermöglichen aber trotzdem das Strömen eines passenden Volumenstroms zu oder von den jeweiligen Zu-/Ableitungsöffnungen 5b bis 5d.

In **Figuren 5a** bis **5d** sind schematische Darstellungen einer vergrößerten Teilansicht eines erfindungsgemäßen Ventils im Bereich der Stellvorrichtung 6, die zugleich auch als Anpressvorrichtung 16 ausgebildet ist, gezeigt. Die Trennvorrichtung 2b ist auch in diesen Figuren 5a bis 5d in ihrer Position zu einer anderen Trennvorrichtung radial und relativ verstellbar. Die kombinierte Stell-Anpressvorrichtung ist hier aber entlang der Stellvorrichtungsstellachse 7 und positionsgleichen Anpressvorrichtungsverstellachse 13 axial verstellbar. Auch in diesen Figuren 5a bis 5d ist die kombinierte Stell-Anpressvorrichtung in der Stellvorrichtungsaussparung 12 und der positionsgleichen Anpressvorrichtungsaussparung 14 als Vorrichtungsaussparungen 11 angeordnet. Ferner ist die kombinierte Stell-Anpressvorrichtung zwischen den Kontaktbereichen 15 der Trennvorrichtung 2b angeordnet und berührt diese, wobei hier die Besonderheit gegeben ist, dass die beiden Kontaktbereiche 15 der Trennvorrichtung 2b auf jeder Seite (zwecks besserer Übersichtlichkeit) nur (jeweils einmal) punktuell ausgebildet sind. Vorteilhaft wäre hier für die praktische Anwendung, auf jeder Seite wenigstens zwei (punktuelle) Kontaktbereiche 15 möglichst weit voneinander entfernt anzuordnen und entsprechend zwei identische kombinierte Stell-Anpressvorrichtungen anzuordnen. Auf diese Weise würde einem möglichen Verkanten entgegengewirkt.

Die Trennvorrichtung 2b ist auch hier als Kreisbogen und für radiale Krafteinwirkungen elastisch ausgebildet. Die Stellvorrichtungsführungen 10 sind fest an einer Stelle im Ventilgehäuse angeordnet und können sich drehen und/oder die Verstellachsen gleiten an ihnen entlang.

Eine kombinierte Stell-Anpressvorrichtung könnte auch als radial und axial verstellbar ausgebildet, angeordnet und eingerichtet sind. Beispielsweise könnte ein axiales Verschieben als Anpressvorrichtung wirken und ein Drehen als radiales Verstellen die Ventilpositionen erwirken, oder umgekehrt.

In Figur 5a wirkt die kombinierte Stell-Anpressvorrichtung als Anpressvorrichtung16; der Abstand zwischen den beiden Kontaktbereichen 15 ist hier maximal groß. Entsprechend stark ist der Anpressdruck zwischen den beiden Trennvorrichtungen und entsprechend dichtend sind diese zueinander angeordnet.

In Figur 5b ist die kombinierte Stell-Anpressvorrichtung entlang der Stellvorrichtungsverstellachse 7 und der identischen Anpressvorrichtungsverstellachse 13 verschoben abgebildet. Beim Verschieben wurde die kombinierte Stell-Anpressvorrichtung, bzw. deren Verstellachsen, durch die Stellvorrichtungsführungen 10 geführt. Die Anpressvorrichtung 16 ist an ihrer so ersteuerten Stelle verjüngt, wodurch das dann folgende Verstellen weniger Kraftaufwand erfordert. Bei der hier beispielhaft gegebenen Formgebung der Stellvorrichtung 6 entspannt sich die Trennvorrichtung 2b von der rechten Seite aus.

In Figur 5c bleibt der Abstand zwischen den Kontaktbereichen 15 und somit zwischen den beiden Enden der Trennvorrichtung 2b gleich groß, allerdings wird durch die Form und das Verstellen der kombinierten Stell-Anpressvorrichtung die Trennvorrichtung 2b nach links verschoben/verstellt. Vorzugsweise befindet sich das Ventil dann wieder in einer Soll-Ventilstellung.

In Figur 5d wird die Krafteinwirkung auf die Trennvorrichtung 2b auf der rechten Seite wieder erhöht, wodurch auch der Anpressdruck, welcher von der Trennvorrichtung 2b auf die anliegende andere Trennvorrichtung ausgeübt wird, erhöht wird und die Trennvorrichtungen wieder dichtender aneinander angeordnet sind.

Durch die Form der kombinierten Stell-Anpressvorrichtung kann bestimmt werden, wie leicht oder schwer und über wie große Verstellwege sich die Trennvorrichtung 2b verstellen lässt. In diesem Beispiel sind zur besseren Übersichtlichkeit nur zwei Soll-Ventilstellungen mit der kombinierten Stell-Anpressvorrichtung ersteuerbar. Mit komplexeren Stell-Anpressvorrichtungen und entsprechendem Aufbau von Ventil und Trennvorrichtungen sind natürlich ggf. weitere/mehr Soll-Ventilstellungen ersteuerbar.

Neben dieser in Figur 5 beispielhaft gezeigten axial verstellbaren kombinierten Stell-Anpressvorrichtung sind auch scheibenartig ausgebildete Stell- und Stell-Anpressvorrichtungen denkbar und ggf. vorteilhaft einsetzbar.

In **Figur 6** ist eine schematische Darstellung einer Trennvorrichtung 2 - im Aufbau vergleichbar mit den Trennvorrichtungen 2b der Figuren 1, 2, 3 und 4 - eines erfindungsgemäßen Ventils mit einer Stellvorrichtung 6 und Stellvorrichtungsverstellachse 7 gezeigt. Da die Stellvorrichtung 6 rund ausgebildet ist, wirkt diese ausschließlich als Stellvorrichtung 6 und ist keine kombinierte Stell-Anpressvorrichtung. Die Trennvorrichtung 2 ist als Kreisbogen ausgebildet. Da diese nicht durch eine Anpressvorrichtung unterschiedlich stark gespreizt wird, muss sie auch nicht radial elastisch ausgebildet sein. Die Stellvorrichtung 6 berührt die Kontaktbereiche 15 an beiden Enden der Trennvorrichtung 2 und ist somit in der

Vorrichtungsaussparung 11 angeordnet, die in diesem Fall eine Stellvorrichtungsaussparung 12, aber keine Anpressvorrichtungsaussparung 14 ist. Die Trennvorrichtung 2 ist hier im Bereich der Stellvorrichtungsaussparung 12 als Vorrichtungsaussparung 11 beispielhaft vollständig unterbrochen. Die Stellvorrichtungsverstellachse 7 ist an einer festen Position drehbar im Ventilgehäuse angeordnet und fest mit der Stellvorrichtung 6 verbunden; sie kann sich also nicht in der Stellvorrichtung 6 drehen. Wird an der Stellvorrichtungsverstellachse 7 gedreht - beispielsweise manuell oder per Elektromotor - so verändern sich die Abstände zwischen der Stellvorrichtungsverstellachse 7 und den Kontaktbereichen 15, wodurch wiederum die Trennvorrichtung 6 verschoben und das Ventil verstellt wird.

Bei einer solchen Anordnung ohne Anpressvorrichtung und Ausbildung einer Trennvorrichtung 2 als Kreisbogen ist es trotzdem vorteilhaft, wenn diese radial elastisch ausgebildet ist. Das Einfügen der radial elastischen Trennvorrichtung 2 in das Ventilgehäuse, bzw. an weitere Trennvorrichtungen ist dann leichtgängiger/einfacher. Der notwendige oder erwünschte Anpressdruck zwischen den Trennvorrichtungen ist relativ einfach durch das Einbauen einer entsprechend anpressdruckerhöhenden Stellvorrichtung 6 - in diesem Beispiel der Figur 6 durch eine Stellvorrichtung 6 mit entsprechend großem Durchmesser - zu erreichen.

In **Figur 7** ist eine weitere schematische Darstellung einer Trennvorrichtung 2 eines erfindungsgemäßen Ventils mit einer Stellvorrichtung 6 und Stellvorrichtungsverstellachse 7 gezeigt. Die Stellvorrichtung 6 ist auch hier in einer Stellvorrichtungsaussparung 12 als Vorrichtungsaussparung 11 angeordnet, die in der Figur allerdings nicht hinreichend gut mit Bezugszeichen versehen werden konnte, weshalb diese in der Figur fehlen. Durch die im Bereich der Stellvorrichtungsaussparung 12 nicht unterbrochene Ausbildung dieser Trennvorrichtung 2 kann diese als Hohlzylinder betrachtet/bezeichnet werden. Somit ist eine solche Trennvorrichtung 2 im Prinzip nicht radial elastisch ausgebildet. Bezüglich des Verstellens gilt das gleiche wie zu Figur 6 erläutert. Die Stellvorrichtungsverstellachse 7 ist an einer festen Position drehbar im Ventilgehäuse angeordnet und fest mit der Stellvorrichtung 6 verbunden; sie kann sich also nicht in der Stellvorrichtung 6 drehen. Wird an der Stellvorrichtungsverstellachse 7 gedreht - beispielsweise manuell oder per Elektromotor - so verändern sich die Abstände zwischen der Stellvorrichtungsverstellachse 7 und den Kontaktbereichen 15, wodurch wiederum die Trennvorrichtung 6 verschoben und das Ventil verstellt wird.

Wählt man im Bereich der Stellvorrichtungsaussparung / der Stellvorrichtung 6 für die Trennvorrichtung 2 allerdings ein elastisches Material, so kann auch eine solche als Hohlzylinder ausgebildete Trennvorrichtung 2 radial elastisch ausgebildet sein.

In den **Figuren 8a und 8b** sind weitere schematische Darstellungen einer als Kreisbogen ausgebildeten Trennvorrichtung 2 eines erfindungsgemäßen Ventils mit einer Stellvorrichtung 6 mit Stellvorrichtungsverstellachse 7 und einer Anpressvorrichtung 16 mit Anpressvorrichtungsverstellachse 13 gezeigt. Die Stellvorrichtung 6 ist hier beispielhaft rund ausgebildet und die Anpressvorrichtung 16 ellipsenförmig. Die Durchlassaussparungen 1 sind hier waagerecht und somit rechtwinkelig zur Anpressvorrichtungsverstellachse 13 angeordnet, da die Trennvorrichtung 2 durch die Stellvorrichtung 6 axial zur Anpressvorrichtungsverstellachse 13 verschiebbar ausgebildet, angeordnet und eingerichtet ist. Die Positionen der Stellvorrichtungsverstellachse 7 und der Anpressvorrichtungsverstellachse 13 sind wieder fix im Ventilgehäuse. Die Anpressvorrichtung 16 und die Stellvorrichtung 6 sind wieder nicht fest mit der Trennvorrichtung 2 verbunden. Vorteilhaft wäre hier, wenn die Stellvorrichtung 6 und die Anpressvorrichtung 16 mechanisch drehbewegungsgekoppelt ausgebildet, angeordnet und eingerichtet wären, vorzugsweise über Zahnräder an deren Verstellachsen. Zur besseren Übersichtlichkeit wurde in dieser Figur 8 auf eine entsprechende Darstellung verzichtet.

In Figur 8a befindet sich das Ventil/die Trennvorrichtung 2 in einer Soll-Ventilstellung, weshalb die elliptische Anpressvorrichtung 16 mit ihrer Hauptachse auf die Kontaktbereiche 15 drückt, was wiederum den Anpressdruck maximiert. So kann eine möglichst hohe Dichtigkeit zwischen den im Wesentlichen dichtend aneinander liegenden Trennvorrichtungen in dieser Soll-Ventilstellung erreicht werden. Die Position der Stellvorrichtung 6 ist beispielhaft aktuell so, dass die - fest, aber nicht zentral in der Stellvorrichtung 6 angeordnete - Stellvorrichtungsverstellachse 7 sich innerhalb der Stellvorrichtung 6 mittig und unten befindet.

In Figur 8b befindet sich das Ventil/die Trennvorrichtung 2 innerhalb eines Verstellvorgangs. Die Stellvorrichtung 6 wurde bisher - im Vergleich zu Figur 8a - über die Stellvorrichtungsverstellachse 7 um 90 Grad gegen den Uhrzeigersinn gedreht. Die Anpressvorrichtung 16 wurde ebenfalls um 90 Grad gedreht. Deshalb drückt die Anpressvorrichtung 16 hier aktuell lediglich über die Nebenachse der Ellipse auf die Kontaktbereiche 15, weshalb der Anpressdruck kleiner ist, aber auch der Reibungswiderstand und somit auch die zum Verstellen des Ventils in die nächste Soll-Ventilstellung notwendige Kraft bei der Stellvorrichtung 6. Das Ventil ist in diesem Zustand zwar ggf. nicht in Richtung der geschlossenen Zu-/Ablauföffnungen optimal abdichtend ausgelegt; aufgrund der geringen notwendigen Verstellkraft und - aufgrund mehrerer Durchlassöffnungen für jeweils eine Zu-/Ableitungsöffnung - kurzer Verstellwege läuft dieser Verstellvorgang schnell ab und das Ventil befindet sich nur sehr kurz in diesem Übergangszustand des Verstellens, selbst bei z.B. relativ kleinen/schwachen Elektromotoren. Die Stellvorrichtung 6 hat die Trennvorrichtung 2 im Vergleich zu Figur 8a bereits zur Hälfte nach unten gedrückt. Im verbleibenden Schritt des Ersteuerns der nächsten Soll-Ventilstellung würde die Stellvorrichtung 6 sich um weitere 90 Grad gegen den Uhrzeigersinn drehen, somit die Trennvorrichtung 2 weiter nach unten drücken, und die Anpressvorrichtung 16 wieder in eine Position gestellt werden, dass die Anpressvorrichtung 16 über ihre Hauptachse die maximal mögliche Kraft auf die Kontaktbereiche 15 und somit einen maximalen Anpressdruck zwischen den Trennvorrichtungen ausübt.

Zur besseren Übersichtlichkeit sind hier die Stellvorrichtung 6, aber insbesondere die Anpressvorrichtung 16 überdimensional abgebildet. Ebenfalls aus diesem Grund beschränkt sich dieses Beispiel auf ein Ventil mit lediglich zwei Ventil-Sollstellungen.

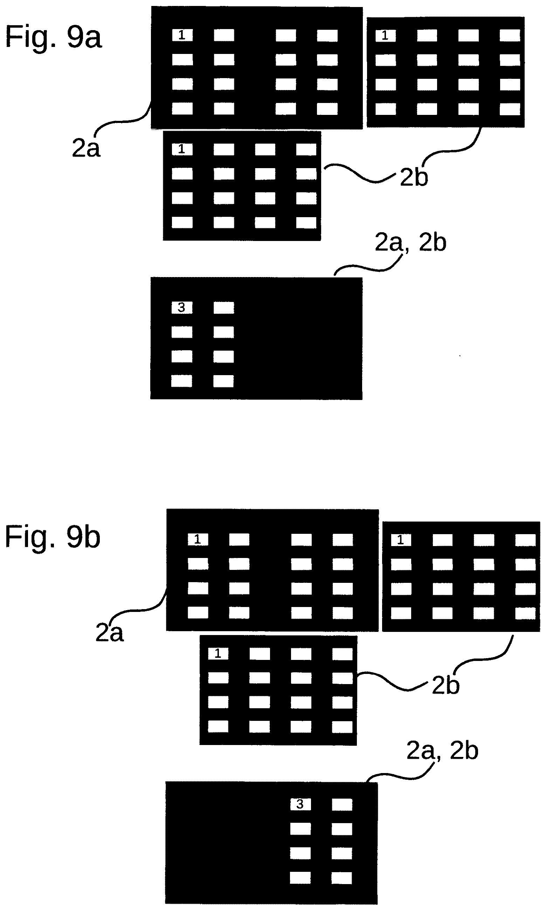

In den **Figur 9a bis 9i** sind weitere schematische Darstellungen von als ebene Fläche ausgebildeten Trennvorrichtungen 2a, 2b eines erfindungsgemäßen Ventils gezeigt.

In Figur 9a sind die Trennvorrichtungen 2a und 2b einmal nebeneinander liegend und einmal hintereinander angeordnet gezeigt. Nebeneinander liegend ist die Trennvorrichtung 2b zweimal abgebildet, wobei die untere Abbildung der Trennvorrichtung 2b ihre horizontale und die rechte Abbildung der Trennvorrichtung 2b ihre vertikale Position relativ zur Trennvorrichtung 2a veranschaulicht. Darunter ist dann gezeigt welche Durchlassaussparungen 1 der beiden - nun hintereinander angeordneten - Trennvorrichtungen 2a und 2b durch eine deckungsgleiche Position Durchlassöffnungen 3 bilden. In dieser Figur 9a sind dies acht Durchlassöffnungen 3, die hier - beispielsweise angenommen, aber nicht abgebildet - alle eine Zu-/Ableitungsöffnung versorgen könnten.

In Figur 9b ist die Trennvorrichtung 2b nun horizontal um die Breite einer Durchlassaussparung 1 verschoben/verstellt abgebildet, was durch die im Vergleich zu Figur 9a veränderte Position der unter der Trennvorrichtung 2a abgebildeten Trennvorrichtung 2b erkennbar ist. Durch diese Positionsänderung der Trennvorrichtung 2b relativ zur Trennvorrichtung 2a ergibt sich ein Schließen der Durchlassöffnungen 3 gem. Figur 9a und ein Öffnen von daneben angeordneten anderen acht Durchlassöffnungen 3; hier wird wieder beispielhaft angenommen, aber nicht abgebildet, dass diese nun eine andere Zu-/Ableitungsöffnung versorgen. Somit sind horizontal betrachtet jeweils zwei kleine Durchlassaussparungen 1 einer Reihe und vertikal betrachtet jeweils vier kleine Durchlassaussparungen 1 dieser Reihen - insgesamt jeweils acht - einer Zu-/Ableitungsöffnung zugeordnet. Durch die Ausbildung und Anordnung der Durchlassaussparungen 1 ergibt sich u.a. horizontal ein 1/2 und vertikal nur 1/4 des Verstellweges im Vergleich zu einer Durchlassaussparung, welche als eine einzelne und entsprechend große Durchlassaussparung ausgebildet wäre.

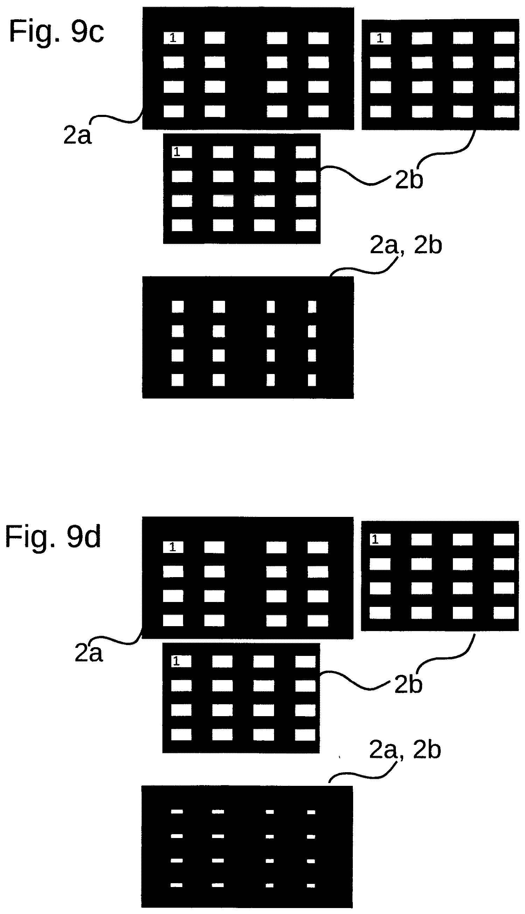

In Figur 9c ist die Trennvorrichtung 2b im Vergleich zur Figur 9b wieder horizontal verstellt abgebildet, diesmal aber nicht vollständig zurück in die Ausgangslage von Figur 9a, sondern nur so weit, dass in beiden linken Spalten die Durchlassöffnungen 3 etwas größer sind als in beiden rechten Spalten. Es werden also zu beiden - hier nicht abgebildete, aber angenommenen - Zu-/Ableitungsöffnungen Durchlassöffnungen 3 geöffnet, wobei deren Größenverhältnis zueinander stufenlos verändert werden kann, bis hin zum vollständigen Schließen auf einer und vollständigen Öffnen auf der anderen Seite.

In Figur 9d ist die horizontale Position der Trennvorrichtung 2b die gleiche wie in Figur 9c, vertikal ist die Trennvorrichtung 2b aber nach oben verstellt worden. So können die Durchlassöffnungen 3 stufenlos verkleinert werden.

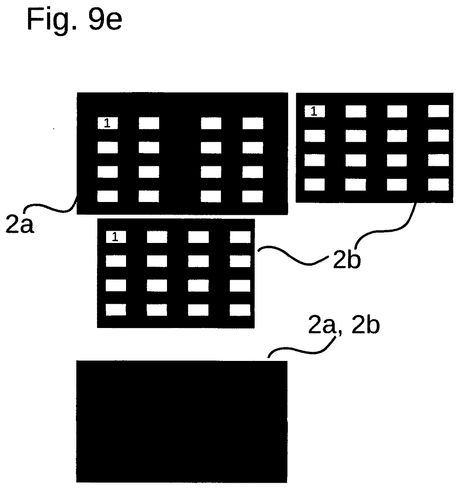

In Figur 9e ist die Trennvorrichtung 2b vertikal nochmals etwas nach oben verstellt abgebildet, so dass hier alle Durchlassaussparungen 1 der Trennvorrichtung 2a durch Aussparungsbrücken 8 der Trennvorrichtung 2b abgedeckt sind und umgekehrt. Da das Schließen aller Durchlassöffnungen 3 hier beispielhaft allein durch eine Vertikalverschiebung der Trennvorrichtung 2b ersteuerbar ist, kann in dieser vertikalen Position der Trennvorrichtung 2b diese zunächst in die gewünschte horizontale Ausgangslage gesteuert werden und anschließend durch ein vertikales Verstellen ausschließlich die gewünschten Durchlassöffnungen 3 und diese in gewünschter Größe geöffnet werden. So können gewünschte Ventilstellungen ersteuert werden, ohne auf dem Verstellweg dorthin unerwünschte Ventilöffnungen in Kauf nehmen zu müssen.

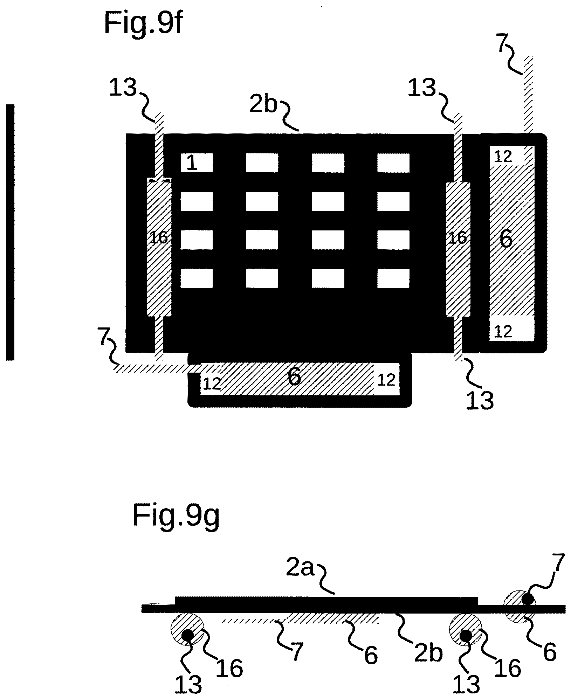

In Figur 9f ist eine beispielhafte schematische Darstellung der Trennvorrichtung 2b gezeigt, ergänzt um zwei Stellvorrichtungen 6 und zwei Anpressvorrichtungen 16. Die rechte, senkrecht angeordnete Stellvorrichtung 6 ermöglicht ein horizontales Verstellen/Verschieben der Trennvorrichtung 2b und die unten, waagerecht angeordnete Stellvorrichtung 6 ermöglicht ein vertikales Verstellen/Verschieben der Trennvorrichtung 2b. Die aktuelle Position der Trennvorrichtung 2b könnte der Position gem. Figur 9a entsprechen

In Figur 9g ist die Draufsicht der gleichen Anordnung in der gleichen Position der Trennvorrichtung 2b noch um die Trennvorrichtung 2a ergänzt. Hier ist erkennbar, dass die Trennvorrichtung 2b durch die beiden Anpressvorrichtungen 16 dichtend an die Trennvorrichtung 2a gedrückt wird.

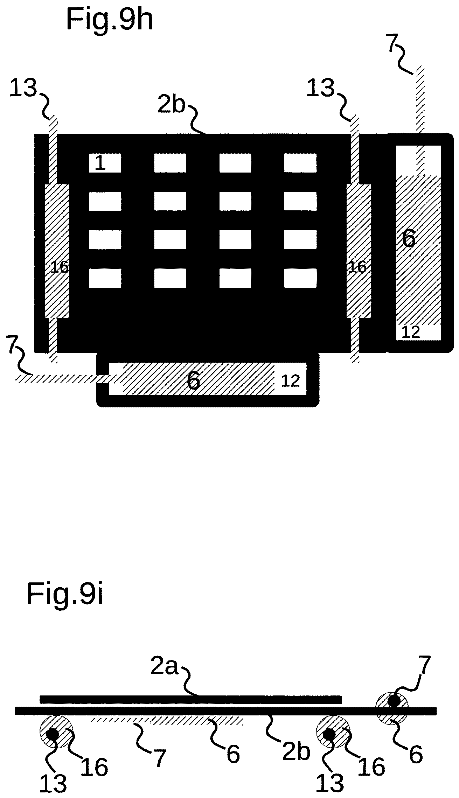

In Figur 9h ist die Trennvorrichtung 2b teilweise nach rechts und teilweise nach oben verstellt/verschoben und könnte somit der Position der Trennvorrichtung 2b gem. Figur 9d entsprechen; Figur 9i ist wiederum die Draufsicht der Anordnung gem. Figur 9h und wieder ergänzt um die Trennvorrichtung 2a. In beiden Figuren 9h und 9i ist an der Stellung der beiden Anpressvorrichtungen 16 zu erkennen, dass diese keinen oder nicht den maximalen Druck auf die Trennvorrichtung 2b ausüben; in Figur 9i wird darauf zudem durch den übertrieben dargestellten Spalt zwischen den beiden Trennvorrichtungen 2a und 2b hingewiesen. In der Praxis/Realität würden die beiden Trennvorrichtungen immer noch dicht aneinander liegen, nur weniger stark aneinander gedrückt und somit leichter gegeneinander verschiebbar, also leichter relativ zueinander positionierbar.

Durch die kurzen Verstellwege in diesem Beispiel können solche erfindungsgemäßen Ventile sehr schnell, bzw. mit geringer mechanischer Arbeit verstellt werden. Im Falle des Verstellens per Getriebeelektromotor beispielsweise kann dieser als relativ kleiner Motor mit passender Übersetzung das Ventil trotzdem schnell verstellen. Die Größe der Durchlassaussparungen 1 kann auch noch deutlich kleiner ausgelegt werden, bei entsprechend größerer Anzahl an Durchlassaussparungen 1. Dadurch werden die Verstellwege entsprechend nochmals deutlich kürzer, die notwendige mechanische Arbeit nochmals deutlich geringer. Die Möglichkeit der Anpressdruckreduzierung beim Verstellen mit Hilfe steuerbarer Anpressvorrichtungen 16 reduziert die notwendige Kraft zum Verstellen der Trennvorrichtungen zusätzlich erheblich, was die notwendige mechanische Arbeit beim Verstellen nochmals deutlich verringert. Ferner können noch deutlich mehr Durchlassaussparungen für deutlich mehr mögliche Durchlassöffnungen angeordnet sein, wodurch entweder größere Volumenströme durchleitbar sind und/oder mehr Zu-/Ableitungsöffnungen angeordnet werden können. Bei entsprechender Auslegung und Anordnung der Durchlassaussparungen und Aussparungsbrücken können selbst bei mehreren angeordneten Zu-/Ableitungsöffnungen diese einzeln oder in allen erdenkbaren Kombinationen gemeinsam geöffnet und/oder geschlossen werden.

Durchlassaussparungsanordnungen wie beispielhaft in den Figuren 9a bis 9i gezeigt und erläutert können in Ventilen mit Trennvorrichtungen in Kreisbogenform, in Hohlzylinderform und in eben ausgebildeter Form angeordnet und eingerichtet sein, mit entsprechend passend ausgebildeten und angeordneten Stellvorrichtungen und Anpressvorrichtungen. Bei solchen runden Ausführungsformen von Trennvorrichtungen in Kreisbogen- und/oder Hohlzylinderform würden die Trennvorrichtungen - anstelle von vertikal und horizontal wie in Figur 9 gezeigt - radial und axial verstellbar ausgebildet, angeordnet und eingerichtet sein.

### Bezugszeichenliste

- 1:: Durchlassaussparung
- 2, 2a, 2b:: Trennvorrichtung
- 3:: Durchlassöffnung
- 4:: Ventilgehäuse
- 5a bis 5d:: Zu-/Ableitungsöffnungen
- 6:: Stellvorrichtung
- 7:: Stellvorrichtungsverstellachse
- 8:: Aussparungsbrücken
- 9:: Verbindungskanal
- 10:: Stellvorrichtungsführung
- 11:: Vorrichtungsaussparung
- 12:: Stellvorrichtungsaussparung
- 13:: Anpressvorrichtungsverstellachse
- 14:: Anpressvorrichtungsaussparung
- 15:: Kontaktbereich
- 16:: Anpressvorrichtung

## Patentansprüche

1. Ventil zur Steuerung des Strömens eines Fluids, mit einem Ventilgehäuse (4) mit wenigstens drei Zu-/Ableitungsöffnungen (5a bis 5d), wenigstens einer Stellvorrichtung (6) und wenigstens zwei im Wesentlichen dichtend aneinander liegenden Trennvorrichtungen (2, 2a, 2b),
**dadurch gekennzeichnet, dass**
- wenigstens eine der Trennvorrichtungen (2, 2a, 2b) durch die wenigstens eine Stellvorrichtung (6) in ihrer relativen Position zu wenigstens einer weiteren der Trennvorrichtungen (2, 2a, 2b) reversibel verstellbar angeordnet, ausgebildet und eingerichtet ist
- die wenigstens zwei Trennvorrichtungen (2, 2a, 2b) Durchlassaussparungen (1) aufweisen und als Teil der Trennvorrichtungen (2, 2a, 2b) zwischen den Durchlassaussparungen (1) Aussparungsbrücken (8) angeordnet sind
- die Durchlassaussparungen (1) so in den Trennvorrichtungen (2, 2a, 2b) ausgebildet und angeordnet sind, dass - durch die im Wesentlichen dichtend aneinander liegenden Trennvorrichtungen (2, 2a, 2b) hindurch - mittels sich wenigstens teilweise überlagernder Durchlassaussparungen (1) Durchlassöffnungen (3) ausbildbar sind
- wenigstens zwei Trennvorrichtungen (2, 2a, 2b) - bezogen auf die Strömungsrichtung des Fluids bei einem Zu-/Ableiten durch die Durchlassöffnungen (3) - hintereinander angeordnet sind
- die Trennvorrichtungen (2, 2a, 2b), die Durchlassaussparungen (1), die Aussparungsbrücken (8) und die wenigstens eine Stellvorrichtung (6) so angeordnet, ausgebildet und eingerichtet sind, dass die Trennvorrichtungen (2, 2a, 2b) mithilfe der wenigstens einen Stellvorrichtung (6) für wenigstens eine der Zu-/Ableitungsöffnungen (5a bis 5d) zeitgleich wenigstens zwei Durchlassöffnungen (3) ausbildend relativ zueinander reversibel positionierbar sind.

2. Ventil nach Anspruch 1,
**dadurch gekennzeichnet, dass**
die Trennvorrichtungen (2, 2a, 2b), die Durchlassaussparungen (1), die Aussparungsbrücken (8) und die wenigstens eine Stellvorrichtung (6) so angeordnet, ausgebildet und eingerichtet sind, dass die Trennvorrichtungen (2, 2a, 2b) mithilfe der wenigstens einen Stellvorrichtung (6) für wenigstens eine der Zu-/Ableitungsöffnungen (5a bis 5d) zeitgleich keine Durchlassöffnungen (3) ausbildend relativ zueinander reversibel positionierbar sind.

3. Ventil nach einem oder mehreren der vorhergehenden Ansprüche,
**dadurch gekennzeichnet, dass**
das Ventilgehäuses (4) an seiner Innenseite als eine der wenigstens zwei Trennvorrichtungen (2, 2a, 2b) ausgebildet und angeordnet ist und
wenigstens eine Trennvorrichtung (2, 2a, 2b) im Wesentlichen dichtend an der Innenseite des Ventilgehäuses (4) anliegt.

4. Ventil nach einem oder mehreren der vorhergehenden Ansprüche,
**dadurch gekennzeichnet, dass**
für wenigstens eine der Zu-/Ableitungsöffnungen (5a bis 5d) wenigstens ein Verbindungskanal (9) zwischen der Außenseite der - für diese wenigstens eine Zu-/Ableitungsöffnung (5a bis 5d) - angeordneten Durchlassaussparungen (1) der äußeren Trennvorrichtung (2, 2a, 2b) und dieser Zu-/Ableitungsöffnung (5a bis 5d) ausgebildet und angeordnet ist.

5. Ventil nach einem oder mehreren der vorhergehenden Ansprüche,
**dadurch gekennzeichnet, dass**
wenigstens eine der Trennvorrichtungen (2, 2a, 2b) als Kreisbogen ausgebildet ist.

6. Ventil nach Anspruch 5,
**dadurch gekennzeichnet, dass**
die wenigstens eine als Kreisbogen ausgebildete Trennvorrichtung (2, 2a, 2b) für radiale Krafteinwirkungen elastisch ausgebildet ist.

7. Ventil nach einem oder mehreren der vorhergehenden Ansprüche,
**dadurch gekennzeichnet, dass**
wenigstens eine der Trennvorrichtungen (2, 2a, 2b) als Hohlzylinder ausgebildet ist.

8. Ventil nach einem oder mehreren der vorhergehenden Ansprüche,
**dadurch gekennzeichnet, dass**
wenigstens eine der wenigstens einen Stellvorrichtung (6)
- in einer Stellvorrichtungsaussparung (12) - an welche angrenzend die Trennvorrichtung (2, 2a, 2b) zwei Kontaktbereiche (15) aufweist - zwischen den beiden Kontaktbereichen (15) der Trennvorrichtung (2, 2a, 2b) angeordnet ist
- für verschiedene Soll-Ventilstellungen und den für diese Soll-Ventilstellungen eingerichteten Stellungen der Stellvorrichtung (6) zur Ersteuerung der Soll-Ventilstellungen passende unterschiedliche Abstände zwischen Stellvorrichtungsverstellachse (7) und den Kontaktpunkten der Stellvorrichtung (6) mit den Kontaktbereichen (15) der Trennvorrichtung (2, 2a, 2b) aufweist.

9. Ventil nach einem oder mehreren der vorhergehenden Ansprüche,
**dadurch gekennzeichnet, dass**
wenigstens eine der wenigstens einen Stellvorrichtung (6) um ihre - bezogen auf die Stellvorrichtung (6) nicht mittig angeordnete - Stellvorrichtungsverstellachse (7) drehbar in einer Stellvorrichtungsaussparung (12) der Trennvorrichtung (2, 2a, 2b) angeordnet ist.

10. Ventil nach einem oder mehreren der Ansprüche 1 bis 8,
**dadurch gekennzeichnet, dass**
wenigstens eine der wenigstens einen Stellvorrichtung (6) entlang ihrer Stellvorrichtungsverstellachse (7) axial verschiebbar in der Stellvorrichtungsaussparung (12) der Trennvorrichtung (2, 2a, 2b) angeordnet ist.

11. Ventil nach einem oder mehreren der vorhergehenden Ansprüche,
**dadurch gekennzeichnet, dass**
in wenigstens einer der Trennvorrichtungen (2, 2a, 2b) wenigstens eine Anpressvorrichtungsaussparung (14) ausgebildet ist und in dieser eine steuerbare Anpressvorrichtung (16) zum reversiblen Ersteuern einer Druckkraft auf die wenigstens eine reversibel verstellbare Trennvorrichtung (2, 2a, 2b) so angeordnet und eingerichtet ist, dass
- zwischen den im Wesentlichen dichtend aneinander liegenden Trennvorrichtungen (2, 2a, 2b)
und/oder
- zwischen wenigstens einer - im Wesentlichen dichtend an der Innenseite des Ventilgehäuses (4) anliegenden - Trennvorrichtung (2, 2a, 2b) und der Innenseite des Ventilgehäuses (4)
ein Anpressdruck reversibel ersteuerbar ist, wobei die steuerbare Anpressvorrichtung (16) nicht mit der reversibel verstellbaren Trennvorrichtung (2, 2a, 2b) fixiert angeordnet ist.

12. Ventil nach Anspruch 11,
**dadurch gekennzeichnet, dass**
wenigstens eine der wenigstens einen Anpressvorrichtung (16) um ihre Anpressvorrichtungsverstellachse (13) drehbar in der Anpressvorrichtungsaussparung (14) der Trennvorrichtung (2, 2a, 2b) angeordnet ist
und/oder
wenigstens eine der wenigstens einen Anpressvorrichtung (16) entlang seiner Anpressvorrichtungsverstellachse (13) axial verschiebbar in der Anpressvorrichtungsaussparung (12) der Trennvorrichtung (2, 2a, 2b) angeordnet ist.

13. Ventil nach einem oder mehreren der vorhergehenden Ansprüche,
**dadurch gekennzeichnet, dass**
wenigstens eine der wenigstens einen Stellvorrichtung (6) zusätzlich als Anpressvorrichtung (16) ausgebildet, angeordnet und eingerichtet ist
und/oder
die Anpressvorrichtung (16) und die Stellvorrichtung (6) so ausgebildet und angeordnet sind, dass die Position der Anpressvorrichtungsverstellachse (13) der Position der Stellvorrichtungsverstellachse (7) entspricht.

14. Ventil nach einem oder mehreren der vorhergehenden Ansprüche,
**dadurch gekennzeichnet, dass**
die wenigstens eine Anpressvorrichtung (16) oder die wenigstens eine Stellvorrichtung (6), die zusätzlich als Anpressvorrichtung (16) ausgebildet ist, bei als Kreisbogen oder Hohlzylinder ausgebildeten Trennvorrichtungen (2, 2a, 2b)
- in der Anpressvorrichtungsaussparung (14) - an welche angrenzend die Trennvorrichtung (2, 2a, 2b) zwei Kontaktbereiche (15) aufweist - zwischen den beiden Kontaktbereichen (15) der Trennvorrichtung (2, 2a, 2b) angeordnet ist
- so ausgebildet, angeordnet und eingerichtet ist, dass die Kontaktbereiche (15) der Trennvorrichtung (6) durch verschiedene Stellungen der Anpressvorrichtung (16) unterschiedlich weit voneinander entfernt positionierbar sind.

15. Fluidspeicher, welcher über - wenigstens teilweise - steuerbare Zu- und Ableitungen in ein Leitungssystem eingebunden ist,
**dadurch gekennzeichnet, dass**
der Fluidspeicher wenigstens ein Ventil nach einem oder mehreren der vorhergehenden Ansprüche umfasst.
